(19) Europäisches Patentamt
European Patent Office
Office européen des brevets

(11) **EP 4 723 334 A1**

(12) **EUROPEAN PATENT APPLICATION**
published in accordance with Art. 153(4) EPC

(43) Date of publication:
08.04.2026  Bulletin 2026/15

(21) Application number: 24869692.4

(22) Date of filing: 24.04.2024

(51) International Patent Classification (IPC):
$H01M\ 50/244^{(2021.01)}$   $H01M\ 50/531^{(2021.01)}$
$H01M\ 50/533^{(2021.01)}$

(52) Cooperative Patent Classification (CPC):
H01M 10/654; H01M 4/70; H01M 10/0587;
H01M 10/613; H01M 10/625; H01M 10/647;
H01M 10/6554; H01M 50/204; H01M 50/244;
H01M 50/502; H01M 50/531; H01M 50/533;
H01M 50/538; B60L 50/64; B60L 58/24;   (Cont.)

(86) International application number:
PCT/CN2024/089481

(87) International publication number:
WO 2025/066123 (03.04.2025 Gazette 2025/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  28.09.2023   CN 202322655888 U

(71) Applicant: **Contemporary Amperex Technology
Co., Limited
Ningde, Fujian 352100 (CN)**

(72) Inventors:
• **DAN, Jianglei
Ningde, Fujian 352100 (CN)**
• **DU, Xinxin
Ningde, Fujian 352100 (CN)**
• **TANG, Daichun
Ningde, Fujian 352100 (CN)**
• **PEI, Xintong
Ningde, Fujian 352100 (CN)**

(74) Representative: **Gong, Jinping
CocreateIP
Neumarkter Straße 21
81673 München (DE)**

(54) **BATTERY AND ELECTRIC DEVICE**

(57)   The present application provides a battery and an electrical apparatus. The battery includes a battery cell and a plurality of heat exchange plates. The battery cell includes a shell and an electrode unit accommodated in the shell, the electrode unit includes a plurality of first electrode plate layers, the plurality of first electrode plate layers have the same polarity and are stacked in a first direction, some of the first electrode plate layers are provided with first tabs and form two first tab groups, each first tab group includes a plurality of first tabs stacked and connected to one another, and a first electrode plate layer which is provided with no first tab is provided between the two first tab groups. The plurality of heat exchange plates are arranged in the first direction, the shell is arranged between adjacent heat exchange plates and can exchange heat with the heat exchange plates, and each first electrode plate layer at least partially overlaps with the heat exchange plate in the first direction.

FIG. 5

EP 4 723 334 A1

(52) Cooperative Patent Classification (CPC): (Cont.)
H01M 2004/021; H01M 2004/027; H01M 2220/20;
Y02E 60/10

**Description**

**CROSS-REFERENCE TO RELATED APPLICATIONS**

The present application claims priority to Chinese patent application No. 202322655888.X filed on September 28, 2023 and entitled "BATTERY AND ELECTRICAL APPARATUS," the entire content of which is incorporated herein by reference.

**TECHNICAL FIELD**

The present application relates to the field of batteries, in particular to a battery and an electrical apparatus.

**BACKGROUND**

With the development of new-energy technologies, batteries are increasingly widely applied, such as applied in a mobile phone, a laptop, a storage battery car, an electric vehicle, an electric airplane, an electric boat, an electric toy car, an electric toy boat, an electric toy airplane, and an electric tool.

The development of the battery technology has to take into account multiple design factors at the same time. How to improve the cycle life of batteries is an important research direction in the battery field.

**SUMMARY OF THE INVENTION**

The present application provides a battery and an electrical apparatus, which can improve the cycle life of the battery.

In a first aspect, the present application provides a battery, which includes a battery cell and a plurality of heat exchange plates. The battery cell includes a shell and an electrode unit accommodated in the shell, the electrode unit includes a plurality of first electrode plate layers, the plurality of first electrode plate layers have the same polarity and are stacked in a first direction, some of the first electrode plate layers are provided with first tabs and form two first tab groups, each first tab group includes a plurality of first tabs stacked and connected to one another, and the first electrode plate layer which is provided with no first tab is provided between the two first tab groups. The plurality of heat exchange plates are arranged in the first direction, the shell is arranged between adjacent heat exchange plates and can exchange heat with the heat exchange plates, and each first electrode plate layer at least partially overlaps with the heat exchange plate in the first direction.

The heat exchange plates located on two sides of the shell are arranged close to the two first tab groups, and may absorb heat, produced by the two first tab groups, through the shell during a charge and discharge of the battery, so that temperature rise of each first tab may be reduced, and a temperature difference of a plurality of first electrode layers is reduced. The first electrode plate layer located between the two first tab groups is provided with no first tab, so temperature rise of the first electrode plate layer located between the two first tab groups is also small though the first electrode plate layer located between the two first tab groups is far away from the heat exchange plate, so that a temperature difference between the plurality of first electrode plate layers is reduced. In the embodiment of the present application, the heat exchange plates are arranged on the two sides of the shell at the same time, part of first tabs in a middle of the electrode unit are removed, so as to reduce a temperature difference and an impedance difference of the different first electrode plate layers, improve current consistency, improve charge and discharge performance of the battery cell and prolong the cycle life of the battery cell.

In some embodiments, the total number of the first electrode plate layers is N, the number of the first tabs in each first tab group is $K_1$, and $K_1$ and N satisfy: $1/4 \leq K_1/N \leq 7/16$.

By limiting $K_1/N$ to be greater than or equal to 1/4, the total number of the first tabs may be increased, the current carrying capability of an electrode assembly may be improved, a current and temperature rise of each first tab may be reduced, and fast charge capability of the battery cell may be improved. In the embodiment of the present application, by limiting $K_1/N$ to be less than or equal to 7/16, the number of first tabs away from the heat exchange plate in the first direction may be reduced, so that the temperature difference and the impedance difference of the plurality of first electrode plate layers are reduced, and the current consistency is improved.

In some embodiments, $5/16 \leq K_1/N \leq 7/16$, so that the current carrying capability of the electrode assembly and the temperature difference between the first electrode plate layers are further balanced, the current consistency of the electrode assembly is improved, the fast charge capability of the battery cell is improved, and the cycle life of the battery cell is prolonged.

In some embodiments, the number of first electrode plate layers located between the two first tab groups and provided with no first tab is $K_2$, and $K_2$ and N satisfy: $1/8 \leq K_2/N \leq 1/2$.

By limiting $K_2/N$ to be less than or equal to 1/2, so that more first electrode plate layers provided with the first tabs are reserved for the electrode unit, the total number of the first tabs is increased, the current carrying capability of the electrode assembly is improved, the current and temperature rise of each first tab are reduced, and the fast charge capability of the battery cell is improved. In the embodiment of the present application, by limiting $K_2/N$ to be greater than or equal to 1/8, the number of the first tabs away from the heat exchange plate in the first direction may be reduced, so that the temperature difference and the impedance difference of the plurality of first electrode plate layers are reduced, and the current consistency is improved.

In some embodiments, $1/8 \le K_2/N \le 3/8$, so that the current carrying capability of the electrode assembly and the temperature difference between the first electrode plate layers are further balanced, the current consistency of the electrode assembly is improved, the fast charge capability of the battery cell is improved, and the cycle life of the battery cell is prolonged.

In some embodiments, the shell includes two first shell walls arranged opposite to each other in the first direction, and each first shell wall is configured to exchange heat with the heat exchange plates. In the first direction, the minimum spacing between an outer surface of the first shell wall and the first tab closest to the first shell wall is $D_1$ mm. $K_1$, N and $D_1$ satisfy: $21 \le 88 \times K_1/N - D_1/5 \le 38.4$.

By limiting $88 \times K_1/N - D_1/5$ to be greater than or equal to 21, the number of the first tabs is increased, or a heat conduction path between the first tabs and the heat exchange plates is shortened, so that heat produced by the first tabs is reduced, the temperature rise of the first tabs is reduced, and the charge and discharge performance of the battery cell is improved. In the embodiment of the present application, by limiting $88 \times K_1/N - D_1/5$ to be less than or equal to 38.4, a difference between a heat conduction path between the first tab on an innermost side in the first tab group and the heat exchange plates and a heat conduction path between the first tab on an outermost side in the first tab group and the heat exchange plates is reduced, a maximum temperature difference between the plurality of first electrode plate layers is reduced, the current consistency of the electrode assembly is improved, the fast charge capability of the battery cell is improved, and the cycle life of the battery cell is prolonged.

In some embodiments, $26.9 \le 88 \times K_1/N - D_1/5 \le 38.3$.

In some embodiments, the shell includes two first shell walls arranged opposite to each other in the first direction, and each first shell wall is configured to exchange heat with the heat exchange plates. In the first direction, the minimum spacing between an outer surface of the first shell wall and the first tab closest to the first shell wall is $D_1$ mm. $D_1$ is 0.5-5.

By limiting $D_1$ to be greater than or equal to 0.5, a thickness and a strength of the first shell walls satisfy a requirement, and reliability of the battery cell is improved. In the embodiment of the present application, by limiting $D_1$ to be less than or equal to 5, the heat conduction path between the first tabs and the heat exchange plates is shortened, heat produced by the first tabs is reduced, the temperature rise of the first tabs is reduced, and the charge and discharge performance of the battery cell is improved.

In some embodiments, $D_1$ is 1-3.

In some embodiments, the two first tab groups are spaced apart in the first direction. Ends of the two first tab groups are bent in a direction close to each other and are arranged opposite to each other in the first direction. By making the two first tab groups bent, space may be saved, and a space utilization ratio is improved.

In some embodiments, the first electrode plate layer in the middlemost portion in the plurality of first electrode plate layers is provided with no first tab, and the first electrode plate layers corresponding to the two first tab groups are located on two sides of the first electrode plate layer in the middlemost portion respectively.

Among all the first electrode plate layers, the first electrode plate layer in the middlemost portion is farthest from the heat exchange plates. In the embodiment of the present application, the first electrode plate layer in the middlemost portion is provided with no first tab, so temperature rise of the first electrode plate layer in the middlemost portion may be reduced, a temperature difference between the first electrode plate layer in the middlemost portion and the other first electrode plate layers may be reduced, and the current consistency may be improved. The first electrode plate layers corresponding to the two first tab groups are arranged on two sides of the first electrode plate layer in the middlemost portion, so a heat conduction path between each first tab group and the corresponding heat exchange plate may be shortened, thus, the temperature rise of each first tab is reduced, the temperature difference between the two first tab groups is reduced, and the charge and discharge performance of the battery cell is improved.

In some embodiments, the electrode unit includes at least one electrode assembly, and each electrode assembly includes a first electrode plate and a second electrode plate which have opposite polarities. The first electrode plate includes at least part of the plurality of first electrode plate layers, and a plurality of first electrode plate layers of the first electrode plate form at least one first tab group.

The first electrode plate is integrity arranged continuously, so the first electrode plate layer provided with no first tab may conduct a current out through an electrode plate layer arranged on the first tab.

In some embodiments, the first electrode plate and the second electrode plate are wound. In some other embodiments, the electrode assembly includes a plurality of second electrode plates, the first electrode plate layers of the first electrode plate and the second electrode plates are arranged alternately in the first direction, the first electrode plate includes a bent layer, and the bent layer is connected with two adjacent first electrode plate layers.

In some embodiments, the electrode unit includes two electrode assemblies which are arranged in the first direction. Each electrode assembly includes one first tab group.

The two electrode assemblies are arranged, so that the number of the first electrode plate layers of a single one electrode assembly may be reduced, and the risk of displacement of the first tabs during a formation process of the electrode assembly is reduced.

In some embodiments, the first electrode plate is a negative electrode plate. When the battery cell is quickly charged, the first tabs generate more heat. In the embodiment of the present application, by arranging the heat exchange plates and the two first tab groups, the temperature rise of the first tabs may be reduced during a fast charge process, temperature consistency of the electrode assembly is improved, and the fast charge performance of the battery cell is improved.

In some embodiments, the first electrode plate includes a negative electrode active material. A volume distribution particle size Dv50 of the negative electrode active material is $\leq 15 \ \mu m$.

The volume distribution particle size of the negative electrode active material is smaller, and the negative electrode active material has more active reaction sites, which can receive ions faster, thereby improving the charging efficiency of the battery cell and improving the fast charge capability of the battery cell.

In some embodiments, the first electrode plate includes a negative electrode active material, and the negative electrode active material includes at least one of graphite, hard carbon, soft carbon, silicon oxide or silicon carbide.

In some embodiments, a specific surface area of the negative electrode active material is in a range from $0.5 \ m^2/g$ to $5 \ m^2/g$. In the embodiment of the present application, the number of ion intercalation sites of the negative electrode active material may be increased, a rate of ion intercalation into the negative electrode active material may be increased, thus, the charging efficiency of the battery cell is improved, and the fast charge capability of the battery cell is improved.

In some embodiments, the first electrode plate includes a negative electrode current collector and a negative electrode active material layer applied onto a surface of the negative electrode current collector; and a coating weight per unit area of the negative electrode active material layer is less than or equal to $150 \ mg/1540.25 \ mm^2$.

The negative electrode active material layer has a small coating weight per unit area, and the negative electrode active material layer may have a smaller thickness, thereby reducing the resistance of ion intercalation into the negative electrode active material layer during charging and improving the charging efficiency of the battery cell.

In some embodiments, the electrode unit includes a plurality of second electrode plate layers, the polarity of the second electrode plate layers is opposite to the polarity of the first electrode plate layers, and the second electrode plate layers and the first electrode plate layers are stacked in the first direction. Some of the second electrode plate layers are provided with second tabs and form two second tab groups, each second tab group includes a plurality of second tabs stacked and connected to one another, and the second electrode plate layer which is provided with no second tab is provided between the two second tab groups.

The heat exchange plates located on the two sides of the shell are arranged close to the two second tab groups respectively. During the charge and discharge process of the battery, the heat exchange plates may absorb heat produced by the two second tab groups through the shell, so that temperature rise of each second tab is reduced, and a temperature difference between the plurality of second electrode plate layers is reduced. The second electrode plate layer located between the two second tab groups is provided with no second tab, so temperature rise of the second electrode plate layer located between the two second tab groups is also small though the second electrode plate layer located between the two second tab groups is far away from the heat exchange plate, so that a temperature difference between the plurality of second electrode plate layers is reduced. In the embodiment of the present application, the heat exchange plates are arranged on the two sides of the shell at the same time, part of second tabs in a middle of the electrode unit are removed, so as to reduce a temperature difference and an impedance difference between the different second electrode plate layers, improve current consistency, improve charge and discharge performance of the battery cell and prolong the cycle life of the battery cell.

In some embodiments, the total number of the second electrode plate layers is M, the number of the second tabs in each second tab group is $K_3$, and $K_3$ and M satisfy: $1/4 \leq K_3/M \leq 7/16$. Optionally, $5/16 \leq K_3/M \leq 7/16$.

By limiting $K_3/M$ to be greater than or equal to 1/4, the total number of the second tabs may be increased, the current carrying capability of the electrode assembly may be improved, a current and temperature rise of each second tab are reduced, and the fast charge capability of the battery cell is improved. In the embodiment of the present application, by limiting $K_3/M$ to be less than or equal to 7/16, the number of the second tabs away from the heat exchange plates in the first direction may be reduced, so that the temperature difference and the impedance difference of the plurality of second electrode plate layers are reduced, and the current consistency is improved.

In some embodiments, the number of second electrode plate layers located between the two second tab groups and provided with no second tab is $K_4$, and $K_4$ and M satisfy: $1/8 \leq K_4/M \leq 1/2$. Optionally, $1/8 \leq K_4/M \leq 3/8$.

By limiting $K_4/M$ to be less than or equal to 1/2, more second electrode plate layers provided with the second tabs are reserved for the electrode unit, the total number of the second tabs is increased, the current carrying capability of the electrode assembly is improved, the current and temperature rise of each second tab are reduced, and the fast charge capability of the battery cell is improved. In the embodiment of the present application, by limiting $K_4/M$ to be greater than or equal to 1/8, the number of the second tabs away from the heat exchange plates in the first direction may be reduced, so that the temperature difference and the impedance difference of the plurality of second electrode plate layers are reduced, and the current consistency is improved.

In some embodiments, each first tab is a negative electrode tab, and each second tab is a positive electrode tab. The number of the first tabs in the first tab group is greater than the number of the second tabs in the second tab group.

The number of the first tabs is different from the number of the second tabs, so that a current carrying capability of a positive electrode and a current carrying capability of a negative electrode may be designed differentially as required to meet design demands.

In some embodiments, each first tab is a copper tab, each second tab is an aluminum tab, a sum of cross-sectional areas of all the second tabs is A1 with a unit of $mm^2$, and a sum of cross-sectional areas of all the first tabs is A2 with a unit of $mm^2$. $A1 \leq 2.5A2$; and optionally, $A1 \leq 1.5A2$.

Through overall consideration for a fusing point, resistivity and a current flow area of the copper tab and the aluminum tab, A1/A2 is limited to be less than or equal to 2.5, and the aluminum tab may be fused broken earlier than the copper tab when there is overcurrent (for example, when a short circuit occurs), thereby cutting off a circuit in time and reducing the safety risk.

In some embodiments, the battery cell further includes an electrolyte accommodated in the shell, and ionic conductivity of the electrolyte is in a range from 9 mS/cm to 16 mS/cm. The electrolyte has good ionic conductivity, which may reduce the impedance of the battery cell and increase a migration rate of ions, thereby improving the charging efficiency of the battery cell and improving the fast charge capability of the battery cell.

In some embodiments, a direct current resistance of the battery cell is less than or equal to 0.4 milliohm. The battery cell has the smaller direct current resistance, thereby increasing the migration rate of the ions, improving the charging efficiency of the battery cell and improving the fast charge capability of the battery cell.

In some embodiments, each first electrode plate layer includes an electrode plate body, some of the first electrode plate layers are provided with the first tabs extending from ends of the electrode plate bodies in a second direction, where the second direction is perpendicular to the first direction. Each electrode plate body at least partially overlaps with the heat exchange plate in the first direction.

In some embodiments, each heat exchange plate has a size of $H_1$, each electrode plate body has a size of $H_2$, and $0.6 \leq H_1/H_2 \leq 1.2$; and optionally, $0.8 \leq H_1/H_2 \leq 1.1$.

By setting $H_1/H_2$ to be greater than or equal to 0.6, so that a heat exchange area between the heat exchange plates and the electrode plate bodies is increased, a heat exchange efficiency is increased, a temperature variation of the electrode plate body during the charge and discharge process is reduced, and the charge and discharge capability of the battery cell is improved. In the embodiment of the present application, by setting $H_1/H_2$ to be less than or equal to 1.2, so that waste of the heat exchange capability of the heat exchange plates is reduced, a weight and a size of each heat exchange plate are reduced, and an energy density of the battery is improved.

In some embodiments, in the second direction, spacing between an edge of each electrode plate body close to the first tab and an edge of each heat exchange plate close to the first tab is $L_1$, and $L_1 \leq 20$ mm; and optionally, $L_1 \leq 15$ mm.

In a case where the edge of each electrode plate body close to the first tab exceeds the edge of each heat exchange plate close to the first tab, in the embodiment of the present application, $L_1$ is limited to be less than or equal to 20 mm, the heat exchange plate may approach a connection position of the first tab and the electrode plate body as close as possible, namely, the heat exchange plate may approach a position with larger temperature rise as soon as possible, thus, the temperature rise of the electrode assembly is reduced, and the cycle performance of the battery cell is improved. In a case where the edge of each heat exchange plate close to the first tab exceeds the edge of each electrode plate body close to the first tab, in the embodiment of the present application, $L_1$ is limited to be less than or equal to 20 mm, an excessive design for the heat exchange plate may be reduced, a space and weight of the heat exchange plate are reduced, and the energy density is improved.

In some embodiments, in the second direction, the edge of each heat exchange plate close to the first tab exceeds the edge of each electrode plate body close to the first tab; or in the second direction, the edge of each heat exchange plate close to the first tab is flush with the edge of each electrode plate body close to the first tab.

Each heat exchange plate may cover a connection position of a main body portion and the first tab, so as to shorten a heat transfer path between the first tab and the heat exchange plate, reduce the temperature rise of the connection position of the main body portion and the first tab, and improve the cycle performance of the battery cell.

In some embodiments, the shell includes two first shell walls opposite in the first direction, two second shell walls opposite in the second direction and two third shell walls opposite in a third direction, where the first direction, the second direction and the third direction are perpendicular pairwise. The area of each first shell wall is greater than the area of each second shell wall and greater than the area of each third shell wall.

Each first shell wall is a shell wall with a larger area in the shell, the first shell walls are used for exchanging heat with the heat exchange plates, so that a heat exchange area may be increased, the heat exchange efficiency may be improved, a temperature difference between different regions of the electrode assembly is reduced, and the charge and discharge performance of the battery cell is improved.

In some embodiments, a plurality of battery cells arranged in sequence are arranged between the adjacent heat exchange plates, and an arrangement direction of the plurality of battery cells is perpendicular to the first direction. The heat exchange plates can exchange heat with the plurality of battery cells at the same time, so as to improve the heat exchange efficiency and simplify a structure of the battery.

In a second aspect, the present application provides an electrical apparatus, including the battery provided in any embodiment in the first aspect, and the battery is configured to provide electric energy.

## BRIEF DESCRIPTION OF DRAWINGS

The features, advantages and technical effects of the exemplary embodiments of the present application will be described with reference to the accompanying drawings.

FIG. 1 is a structural schematic diagram of a vehicle provided by some embodiments of the present application;
FIG. 2 is a schematic explosive view of a battery provided by some embodiments of the present application;
FIG. 3 is a schematic section view of a battery provided by some embodiments of the present application;
FIG. 4 is a schematic explosive view of a battery cell provided by some embodiments of the present application;
FIG. 5 is a schematic enlarged view of a block in FIG. 3;
FIG. 6 is a schematic enlarged view of a block in FIG. 5;
FIG. 7 is a schematic structural view of an electrode assembly provided by some embodiments of the present application;
FIG. 8 is a schematic section view made in an E-E direction in FIG. 7;
FIG. 9 is a schematic partial section view of a battery provided by some other embodiments of the present application;
FIG. 10 is a schematic diagram of an electrode assembly of a battery cell provided by some other embodiments of the present application;
FIG. 11 is a schematic diagram of an electrode assembly of a battery cell provided by yet some other embodiments of the present application;
FIG. 12 to FIG. 14 are schematic diagrams of a battery cell at different angles in some embodiments of the present application, which show a plurality of detection sites.

Reference numerals are as follows:

1. vehicle; 2. battery; 3. controller; 4. motor; 5. box; 5a. first box portion; 5b. second box portion; 5c. accommodating space; 6. battery cell; 7. heat exchange plate;
10. electrode assembly; 11. first electrode plate; 111. first electrode plate layer; 111a. first tab; 111b. first tab group; 111c. electrode plate body; 112. bent layer; 11a. Negative electrode current collector; 11b. negative electrode active material layer; 12. second electrode plate; 121. second electrode plate layer; 121a. second tab; 121b. second tab group; 13. separator; 10a. straight region; 10b. bent region;
20. shell; 21. shell body; 211. first shell wall; 211a. outer surface; 212. second shell wall; 213. third shell wall; 214. bottom wall; 22. end cover;
30. electrode unit;
40. electrode terminal;
Y. first direction; Z. second direction; and X. third direction.

## DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application shall have the same meanings as those generally understood by those skilled in the art of the present application. The terms used in the present application in the specification of application are merely for the purpose of describing specific embodiments and are not intended to limit the present application. The terms "include" and "have" and any variations thereof in the specification and claims and the above brief description of the drawings of the present application are intended to cover non-exclusive inclusion. The terms "first," "second," etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the embodiments of the present application, the term "parallel" includes not only absolute parallel cases, but also approximately parallel cases that are conventionally known in engineering; and meanwhile, "perpendicular" also includes not only absolute perpendicular cases, but also approximately perpendicular cases that are conventionally known in engineering. Exemplarily, when an included angle between two directions is 85°-90°, the two directions may be considered to be perpendicular; and when an included angle between the two directions is 0°-5°, the two directions may be considered to be parallel.

"A plurality of" appearing in the present application means two or more (including two).

In the embodiments of the present application, the battery cell may be a secondary battery cell. The secondary battery cell refers to a battery cell that, after being discharged, can activate an active material by charging for continued use.

The battery cell can be a lithium-ion battery cell, a sodium-ion battery cell, a sodium/lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead storage battery cell, etc., which is not limited in the embodiments of the present application.

The battery cell generally includes an electrode assembly. The electrode assembly includes a positive electrode plate and a negative electrode plate. During charge and discharge process of the battery cell, active ions (for example, lithium ions) are intercalated and deintercalated back and forth between the positive electrode plate and the negative electrode plate.

In some embodiments, the positive electrode plate may include a positive electrode current collector and a positive electrode active material layer arranged on at least one surface of the positive electrode current collector.

For example, the positive electrode current collector has two surfaces opposite to each other in a thickness direction of the positive electrode current collector, and the positive electrode active material layer is arranged on either or both of the two opposite surfaces of the positive electrode current collector.

As an example, the positive electrode current collector may be a metal foil or composite current collector. For example, silver surface-treated aluminum or stainless steel, stainless steel, copper, aluminum, nickel, carbon electrode, carbon, nickel, titanium, or the like may be used as the metal foil. The composite current collector may include a polymer material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as substrates of polypropylene, polyethylene terephthalate, polybutylene terephthalate, polystyrene, or polyethylene).

As an example, the positive electrode active material layer includes a positive electrode active material, and the positive electrode active material may include at least one of the following materials: a lithium-containing phosphate, a lithium transition metal oxide, and respective modified compounds thereof. However, the present application is not limited to these materials, and other conventional materials that may be used as positive electrode active materials for batteries may also be used. These positive electrode active materials may be used alone or in combination of two or more thereof.

Examples of the lithium-containing phosphate may include, but are not limited to, at least one of lithium iron phosphate (e.g., $LiFePO_4$ (also abbreviated as LFP)), lithium iron phosphate-carbon composite, lithium manganese phosphate (e.g., $LiMnPO_4$), lithium manganese phosphate-carbon composite, lithium iron manganese phosphate, and lithium iron manganese phosphate-carbon composite. Examples of the lithium transition metal oxide may include, but are not limited to, at least one of lithium cobalt oxide (e.g., $LiCoO_2$), lithium nickel oxide (e.g., $LiNiO_2$), lithium manganese oxide (e.g., $LiMnO_2$, $LiMn2O_4$), lithium nickel cobalt oxide, lithium manganese cobalt oxide, lithium nickel manganese oxide, lithium nickel cobalt manganese oxide (e.g., $LiNi_{1/3}Co_{1/3}Mn_{1/3}O_2$ (also abbreviated as $NCM_{333}$), $LiNi_{0.5}Co_{0.2}Mn_{0.3}O_2$ (also abbreviated as $NCM_{523}$), $LiNi_{0.5}Co_{0.25}Mn_{0.25}O_2$ (also abbreviated as $NCM_{211}$), $LiNi_{0.6}Co_{0.2}Mn_{0.2}O_2$ (also abbreviated as $NCM_{622}$), $LiNi_{0.8}Co_{0.1}Mn_{0.1}O_2$ (also abbreviated as $NCM_{811}$), lithium nickel cobalt aluminum oxide (e.g., $LiNi_{0.85}Co_{0.15}Al_{0.05}O_2$), a modified compound thereof, etc.

In some embodiments, the negative electrode plate may include a negative electrode current collector and a negative electrode active material arranged on at least one surface of the negative electrode current collector.

As an example, the negative electrode current collector may be a metal foil, a foam metal, or a composite current collector. For example, as the metal foil, silver surface-treated aluminum or stainless steel, stainless steel, copper, aluminum, nickel, baked carbon, carbon, nickel, titanium, or the like can be used. The foam metal may be foam nickel, foam copper, foam aluminum, foam alloy, or foam carbon, etc. The composite current collector may include a high molecular material substrate and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene terephthalate, polybutylene terephthalate, polystyrene, polyethylene, etc.).

By way of example, the negative electrode current collector has two opposite surfaces in its own thickness direction, and the negative electrode active material is provided on either or both of the two opposite surfaces of the negative electrode current collector.

For example, the negative active material for the battery cell that is commonly known in this field can be used as the negative active material. For example, the negative active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present application is not limited to these materials, and other conventional materials useful as negative electrode active materials for batteries can also be used. One of these negative active materials may be used alone, or two or more of these positive active materials may be used in combination.

In some embodiments, a material of the positive electrode current collector may be aluminum, and a material of the negative electrode current collector may be copper.

In some embodiments, the electrode assembly further includes a separator arranged between the positive electrode plate and the negative electrode plate. The separator may play a role in preventing the positive electrode and the negative electrode from short-circuiting and meanwhile may allow the ions to pass through.

In some embodiments, the separator is a separator film. The type of the separator film is not particularly limited in the present application, and any well-known separator having good chemical stability, mechanical stability, and a porous structure can be selected.

By way of example, the main material of the separator film can be selected from at least one of glass fibers, non-woven fabric, polyethylene, polypropylene, polyvinylidene fluoride, and ceramic. The separator film can be either a single-layer thin film or a multi-layer composite thin film without special limitations. When the separator film is a multi-layer composite thin film, the material in each layer may be same or different, which is not particularly limited. The separator may be a single component located between the positive and negative electrodes, or may also be attached to the surfaces of the positive and negative electrodes.

In some embodiments, the separator is a solid electrolyte. The solid electrolyte is disposed between the positive electrode sheet and the negative electrode sheet, and functions to transport ions and isolate the positive electrode from the negative electrode.

In some embodiments, the battery cell further includes an electrolyte, and the electrolyte plays a role in conducting ions between the positive electrode and the negative electrode. The type of the electrolyte is not specifically limited in the present application and can be selected according to requirements. The electrolyte can be liquid, gel, or solid.

In some embodiments, the liquid electrolyte further comprises an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solution may also be an ether solvent. The ether solvent can include one or more of ethylene glycol dimethyl ether, ethylene glycol diethyl ether, diethylene glycol dimethyl ether, triethylene glycol dimethyl ether, 1,3-dioxolane, tetrahydrofuran, methyltetrahydrofuran, diphenylether, or a crowned ether.

The gel electrolyte comprises a framework network with a polymer as an electrolyte, in combination with an ion liquid-lithium salt.

The solid electrolyte includes a polymer solid electrolyte, an inorganic solid electrolyte, and a composite solid electrolyte.

As an example, a polymer solid electrolyte may be polyether (polyoxyethylene), polysiloxane, polycarbonate, polyacrylonitrile, polyvinylidene fluoride, polymethyl methacrylate, a monoionic polymer, a polyionic liquid-lithium salt, cellulose, or the like.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

As an example, a composite solid electrolyte is formed by adding an inorganic solid electrolyte filler to the polymer solid electrolyte.

In some embodiments, a shape of the electrode assembly may be a cylinder, flat, or a polygonprism, etc.

In some embodiments, the battery cell may comprise a shell. The shell is configured to package components such as the electrode assembly and the electrolyte. The shell can be a steel shell, an aluminum shell, a plastic shell (such as a polypropylene shell), a composite metal shell (such as a copper-aluminum composite shell), an aluminum-plastic film, etc.

By way of example, the battery cell can be a prismatic battery cell, a pouch cell, or a battery cell in other shapes. The prismatic battery cell includes a square-shell battery cell, a blade-shaped battery cell, and a polygonal prism battery cell. For example, the polygonal prism battery cell can be a hexagonal prism battery cell, etc., and is not particularly limited in the present application.

The battery mentioned in the embodiments of the present application refers to a single physical module comprising one or more battery cells to provide a higher voltage and capacity.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. An energy storage apparatus includes an energy storage container, an energy storage electric cabinet, etc.

During the charge process of the battery, the battery cell may generate heat. The heat generated by the battery cell tends to accumulate, causing a temperature of the battery cell to rise. In general, when an operating temperature of the battery cell is generally in a range from 20 to 40 degrees, the charge and discharge performance and cycle life of the battery cell are better.

In some embodiments, the battery includes a heat exchange plate. A heat exchange medium, when flowing through the heat exchange plate, may exchange heat with the battery cell through the heat exchange plate to adjust the temperature of the battery cell so that the battery cell is charged and discharged within a suitable temperature range.

In some embodiments, the electrode assembly is generally provided with tabs, and the tabs include a positive tab and a negative tab. The positive tab and the negative tab may conduct the current out of the electrode assembly. The electrode assembly is usually provided with a plurality of positive tabs and a plurality of negative tabs, where the plurality of positive tabs are stacked and the plurality of negative tabs are stacked.

During charging or discharging, when the current passes through the tabs, the tabs may generate heat; and the heat exchange plate may exchange heat with the tabs through the shell, so as to reduce a temperature of the tabs.

In some embodiments, the electrode plate (the positive electrode plate or the negative electrode plate) forms a plurality of electrode plate layers in a winding or folding more; and for improving the current carrying capability, each electrode plate layer may be provided with a tab.

However, there are many layers of tabs, heat dissipation efficiency of the plurality of tabs may vary due to positions of the heat exchange plates, so temperatures of different positions of the electrode assembly may differ greatly due to the number of layers of the tabs and the positions of the tabs, then impedance of the electrode assembly is affected, consistency of current distribution of the electrode assembly is reduced, and the charge and discharge performance and the cycle life of the battery cell are affected.

In view of this, an embodiment of the present application provides a technical solution, which reduces the temperature difference between different regions of the electrode assembly, reduces the impedance difference between different regions of the electrode assembly, improves the current consistency, improves the charge and discharge performance of the battery cell, and prolong the cycle life of the battery cell by arranging the heat exchange plates on both sides of the battery cell and removing part of tabs in the middle of the electrode assembly.

The battery described by the embodiment of the present application is suitable for an electrical apparatus using the battery.

The electrical apparatus may be vehicles, mobile phones, portable devices, laptops, ships, spacecraft, electric toys, electric tools, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electrical apparatus is not specially limited in the embodiments of the present application.

In the following embodiments, for the convenience of description, the electrical apparatus being a vehicle is taken as an example for illustration.

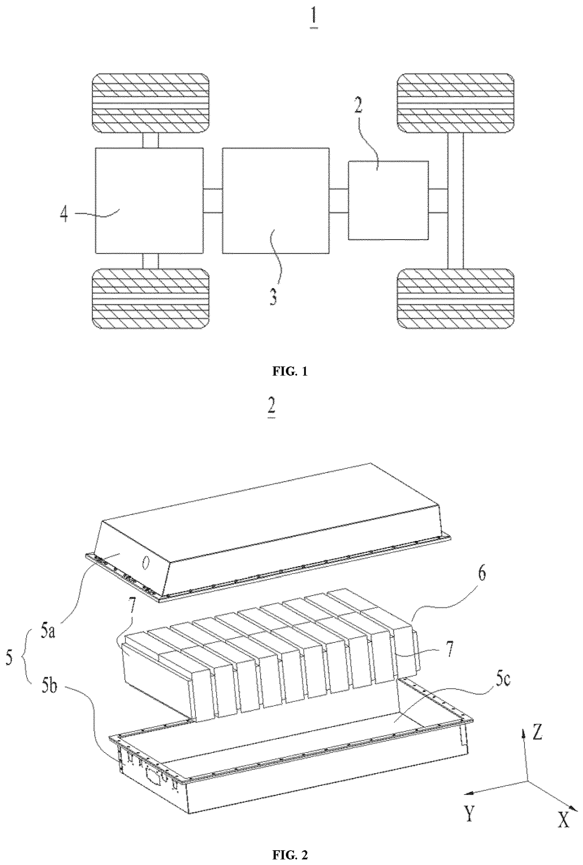

Fig. 1 is a schematic structural diagram of a vehicle according to some embodiments of the present application.

As shown in Fig. 1, the interior of the vehicle 1 is provided with a battery 2, and the battery 2 may be arranged at the bottom or head or tail of the vehicle 1. The battery 2 may be used to power the vehicle 1. For example, the battery 2 may be used as an operating power source of the vehicle 1.

The vehicle 1 can further comprise a controller 3 and a motor 4. The controller 3 is used for controlling the battery 2 to supply power to the motor 4, for example, for the operating power demand when starting, navigating, and driving the vehicle 1.

In some embodiments of the present application, the battery 2 can be used not only as the operating power source of the vehicle 1, but also as a driving power source of the vehicle 1 to replace or partially replace fuel or natural gas to provide driving power for the vehicle 1.

FIG. 2 is an exploded schematic diagram of a battery provided by some embodiments of the present application. As shown in FIG. 2, the battery 2 includes a box 5 and a battery cell 6, and the battery cell 6 is accommodated in the box 5. The battery cell 6 may be the minimum unit which forms the battery.

The box 5 is configured to accommodate the battery cell 6 and may be in various structural forms. In some embodiments, the box 5 may include a first box part 5a and a second box part 5b; the first box part 5a and the second box part 5b are mutually covered; the first box part 5a and the second box part 5b jointly define an accommodating space 5c used for accommodating the battery cell 6. The second box part 5b may be of a hollow structure with an opening formed in one end; the first box part 5a is of a plate-shaped structure, and the first box part 5a covers the opening side of the second box part 5b to form the box 5 with the accommodating space 5c; each of the first box part 5a and the second box part 5b may also be of a hollow structure with an opening formed in one side; and the opening side of the first box part 5a covers the opening side of the second box part 5b to form the box 5 with the accommodating space 5c. Of course, the first box part 5a and the second box part 5b can be in various shapes, such as cylinders and cuboids.

In order to improve the sealing performance after the first box part 5a and the second box part 5b are connected, a sealing member such as a sealant and a sealing ring may also be arranged between the first box part 5a and the second box part 5b.

It is assumed that the first box part 5a covers the top of the second box part 5b, the first box part 5a can also be called as an upper box cover, and the second box part 5b can also be called as a lower box.

In the battery 2, one or a plurality of battery cells 6 can be arranged. If a plurality of battery cells 6 are arranged, the plurality of battery cells 6 can be connected in series or in parallel or in series-parallel connection; and series-parallel connection refers to that the plurality of battery cells 6 are connected in series and in parallel. The plurality of battery cells 6 may be directly connected in series or in parallel or in series-parallel connection, and then the whole body formed by the plurality of battery cells 6 is accommodated in the box 5. Certainly, the plurality of battery cells 6 may also be connected in series or in parallel or in series-parallel connection to form the battery module; and a plurality of batteries modules are connected in series or in parallel or in series-parallel connection as a whole to be accommodated in the box 5.

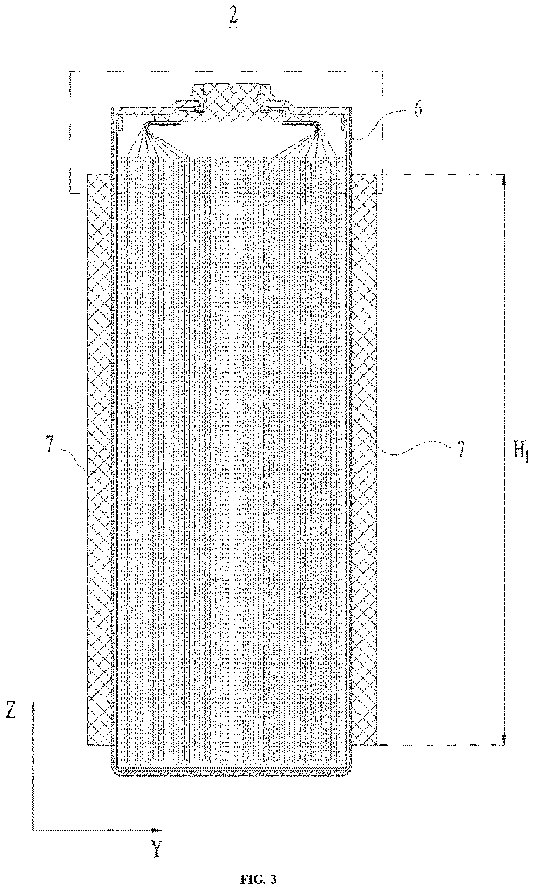

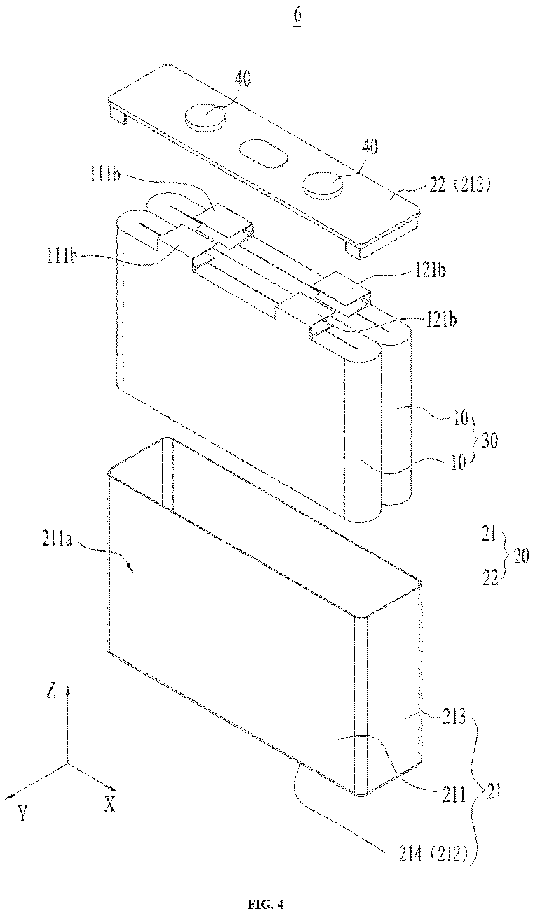

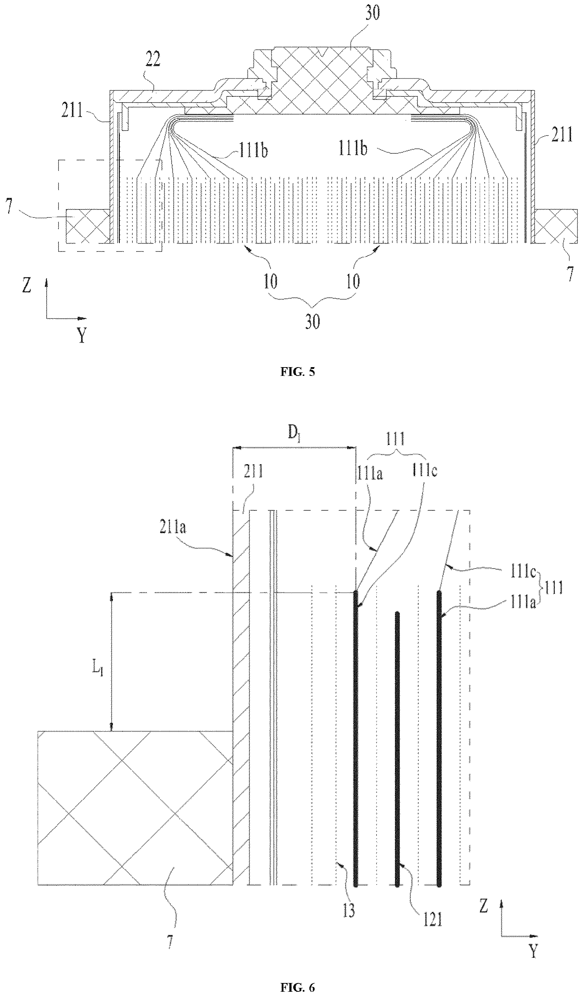

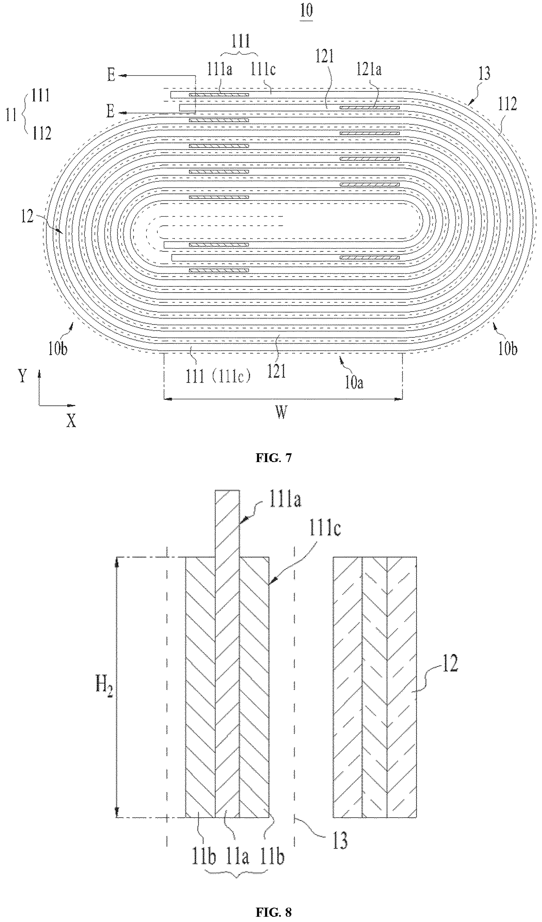

FIG. 3 is a schematic section view of a battery provided by some embodiments of the present application. FIG. 4 is a schematic explosive view of a battery cell provided by some embodiments of the present application. FIG. 5 is a schematic enlarged view of a block in FIG. 3. FIG. 6 is a schematic enlarged view of a block in FIG. 5. FIG. 7 is a schematic structural view of an electrode assembly provided by some embodiments of the present application. FIG. 8 is a schematic section view made in an E-E direction in FIG. 7.

Referring to FIG. 3 to FIG. 8, an embodiment of the present application provides a battery 2, including a battery cell 6. The battery cell 6 includes a shell 20 and an electrode unit 30 accommodated in the shell 20.

There may be one or a plurality of battery cells 6.

The shell 20 is of a hollow structure, and an accommodating space for accommodating the electrode unit 30 is formed in the shell 20. A shape of the shell 20 may be determined according to a specific shape of the electrode assembly. For example, if the electrode assembly is of a cuboid structure, a cuboid shell may be selected.

As an example, the shell 20 includes a shell body 21 and an end cover 22. The shell body 21 has an opening, and the end cover 22 is configured to cover the opening.

The shell body 21 is a component matched with the end cover 22 to form an internal cavity of the battery cell 6, and the formed internal cavity may be configured to accommodate the electrode assembly, the electrolyte and other components.

The shell body 21 and the end cover 22 may be independent components. Exemplarily, an opening may be formed in the shell body 21, and the end cover 22 covers the opening to form the internal cavity of the battery cell 6.

The shell body 21 may be in various shapes and various sizes, such as a cuboid shape, a cylinder shape, and a hexagonal prism shape. Specifically, the shape of the shell body 21 may be determined according to the specific shape and dimension of the electrode assembly. There may be various materials of the shell body 21, such as copper, iron, aluminum, stainless steel and aluminum alloy, which is not specially limited in the embodiment of the present application.

The shape of the end cover 22 can be adapted to the shape of the casing body 21 so as to be matched with the casing body 21. A material of the end cover 22 may be the same as that of the shell body 21 or not. Optionally, the end cover 22 may be made of a material (such as copper, iron, aluminum, stainless steel, aluminum alloy and plastic) with certain hardness and strength, and therefore, the end cover 22 is unlikely to deform when being extruded and collided, the battery cell 6 can gain higher structural strength, and the reliability may also be improved.

The end cover 22 is connected to the shell body 21 in a welding, bonding, clamping or another mode.

One or both ends of the casing body 21 can be opened. In some examples, the casing body 21 can be of a structure with one side opened, and one end cover 22 can be arranged and cover the casing body 21. In some other examples, the shell body 21 may also be of a structure with both sides opened, and there are two end covers 22 that are arranged to respectively cover the two openings of the shell body 21.

In some embodiments, the electrode unit 30 includes a plurality of first electrode plate layers 111 which have the same polarity and are stacked in a first direction Y. Some of the first electrode plate layers 111 are provided with first tabs 111a and form two first tab groups 111b, each first tab group 111b includes a plurality of first tabs 111a stacked and connected to one another, and the first electrode plate layer 111 which is provided with no first tab 111a is provided between the two first tab groups 111b.

The first electrode plate layer 111 may be of positive polarity or negative polarity.

The electrode unit 30 is a component of a battery cell 6 in which an electrochemical reaction occurs. Exemplarily, the electrode unit 30 includes one or more electrode assemblies 10. The electrode assembly 10 includes a first electrode plate 11 and a second electrode plate 12 which have opposite polarities. Each first electrode plate 11 forms at least two first electrode plate layers 111 in a winding or folding mode. When the first electrode plate 11 forms at least two first electrode plate layers 111 in the winding or folding mode, the first electrode plate 11 may also form a bent layer 112 in a bending position, and the bent layer 112 is connected with the first electrode plate layer 111. The first electrode plate 11 may be a positive electrode plate, or a negative electrode plate.

Among all the first electrode plate layers 111, some of the first electrode plate layers 111 are provided with the first tabs 111a, and the other first electrode plate layers 111 are provided with no first tab 111a.

The plurality of first tabs 111a of each first tab group 111b may be connected in a welding, bonding or another mode.

The first electrode plate layer 111 which is provided with no first tab 111a is provided between the two first tab groups 111b, which may be understood that the first electrode plate layer which is provided with no first tab is provided between two groups of first electrode plate layers corresponding to the two first tab groups.

The number of the first tabs 111a in one first tab group 111b may be the same as the number of the first tabs in the other first tab group 111b or not.

Exemplarily, the electrode unit 30 includes j first tabs 111a. In the first direction Y, numbers of the first tabs 111a may be the first first tab, the second first tab, ..., the i[th] first tab, i+1[th] first tab, ..., and the j[th] first tab, i and j are both positive integers, and $i \geq 2$, $j \geq i+2$. One first tab group 111b includes the first to i[th] first tabs, and the other first tab group 111b includes i+1[th] to j[th] first tabs. The first electrode plate layer 111 which is provided with no first tab is provided between the first electrode plate layer 111 corresponding to the i[th] first tab and the first electrode plate layer 111 corresponding to the i+1[th] first tab.

An outer side of the first electrode plate layer 111 provided with the first first tab may have or not have the first electrode plate layer 111 which is provided with no first tab, namely, the first electrode plate layer which is provided with no first tab may be arranged between a shell wall of the shell closest to the first first tab in the first direction Y and the first first tab, or the first electrode plate layer provided with the first first tab is a first electrode plate layer on an outermost side of the electrode unit.

An outer side of the first electrode plate layer 111 provided with the j[th] first tab may have or not have the first electrode plate layer 111 which is provided with no first tab 111a, namely, the first electrode plate layer which is provided with no first tab may be arranged between a shell wall of the shell closest to the j[th] first tab in the first direction Y and the j[th] first tab, or the first electrode plate layer provided with the j[th] first tab is a first electrode plate layer on an outermost side of the electrode unit.

Two adjacent first tabs 111a in the first tab group 111b may be arranged on the two adjacent first electrode plate layers 111 or arranged on two first electrode plate layers 111 that are not adjacent. In other words, the first electrode plate layer 111 which is provided with no first tab 111a may be arranged or not arranged between the two adjacent first tabs 111a in the first tab group 111b.

The two first tab groups 111b are electrically connected so as to electrically connect all the first electrode plate layers 111. Exemplarily, the two first tab groups 111b may be directly connected or indirectly connected through another conductive structure (for example, the following electrode terminal).

In some embodiments, the battery 2 further includes a plurality of heat exchange plates 7 arranged in the first direction Y. The shell 20 is arranged between the adjacent heat exchange plates 7 and can exchange heat with the heat exchange plates 7. In the first direction Y, each first electrode plate layer 111 at least partially overlaps with the heat exchange plate 7. The heat exchange plate 7 may be configured to adjust the temperature of the battery cell 6. Exemplarily, the heat exchange plate 7 has a flow channel inside, and a heat exchange medium can flow in the flow channel and exchange heat with the shell 20 through the heat exchange plate 7.

The plurality of heat exchange plates 7 may be heat exchange plates of an integral design. The plurality of heat exchange plates 7 may also be split, and the flow channels of the plurality of heat exchange plates 7 may be connected or not.

One battery cell 6 or a plurality of battery cells 6 may be arranged between the adjacent heat exchange plates 7. Exemplarily, a plurality of battery cells 6 arranged in sequence may be arranged between the adjacent heat exchange plates 7, and an arrangement direction of the plurality of battery cells 6 is perpendicular to the first direction Y.

A projection of the first electrode plate layer 111 in the first direction Y at least partially overlaps with a projection of the heat exchange plate 7 in the first direction Y.

In the embodiment of the present application, the heat exchange plates 7 located on two sides of the shell 20 are arranged close to the two first tab groups 111b respectively, and during the charge and discharge process of the battery 2, the heat exchange plate 7 may absorb, through the shell 20, the heat produced by the two first tab groups 111b, so that the temperature rise of each first tab 111a is reduced, and the temperature difference between the plurality of first electrode layers 111 is reduced. The first electrode plate layer 111 located between the two first tab groups 111b is provided with no first tab 111a, so the temperature rise of the first electrode plate layer 111 located between the two first tab groups 111b is also small though the first electrode plate layer 111 located between the two first tab groups 111b is far away from the heat exchange plate 7, and thus the temperature difference between the plurality of first electrode plate layers 111 is reduced. In the embodiment of the present application, by arranging the heat exchange plates 7 on the two sides of the shell 20 at the same time and removing part of the first tabs 111a in the middle of the electrode unit 30, the temperature difference and the impedance difference between the different first electrode plate layers 111 are reduced, the current consistency is improved, the charge and discharge performance of the battery cell 6 is improved, and the cycle life of the battery cell 6 is prolonged.

In some embodiments, the plurality of battery cells 6 arranged in sequence are arranged between the adjacent heat exchange plates 7, and the arrangement direction of the plurality of battery cells 6 located between the adjacent heat exchange plates 7 is perpendicular to the first direction Y.

Optionally, the arrangement direction of the plurality of battery cells 6 may be parallel to the second direction Z, or may be parallel to the third direction X. The first direction Y, the second direction Z and the third direction X are perpendicular pairwise.

In the embodiment of the present application, the heat exchange plates 7 can exchange heat with the plurality of battery cells 5 at the same time, so as to improve the heat exchange efficiency and the simplify a structure of the battery.

In some embodiments, the total number of the first electrode plate layers 111 is N, the number of the first tabs 111a in each first tab group 111b is $K_1$, and $K_1$ and N satisfy: $1/4 \leq K_1/N \leq 7/16$.

As an example, N is a positive integer and is greater than j.

In the embodiment of the present application, the number $K_1$ of the first tabs 111a in one first tab group 111b may be the same as the number $K_1$ of the first tabs 111a in the other first tab group 111b or not. Exemplarily, the number $K_1$ of the first tabs 111a in one first tab group 111b is equal to i, and the number $K_1$ of the first tabs 111a in the other first tab group 111b is equal to j-i. j-i may be equal to i, or not equal to i.

Though the number $K_1$ of the first tabs 111a in one first tab group 111b may be not the same as the number $K_1$ of

the first tabs 111a in the other first tab group 111b, the number $K_1$ of the first tabs 111a in each first tab group 111b satisfies $1/4 \leq K_1/N \leq 7/16$.

Optionally, $K_1/N$ is 1/4, 9/32, 5/16, 11/32, 6/16, 13/32 or 7/16.

In the embodiment of the present application, by limiting $K_1/N$ to be greater than or equal to 1/4, the total number of the first tabs 111a may be increased, the current carrying capability of the electrode assembly 10 is improved, the current and the temperature rise of each first tab 111a are reduced, and the fast charge capability of the battery cell 6 is improved. In the embodiment of the present application, by limiting $K_1/N$ to be less than or equal to 7/16, the number of the first tabs 111a away from the heat exchange plate 7 in the first direction Y may be reduced, so that the temperature difference and the impedance difference between the plurality of first electrode plate layers 111 are reduced, and the current consistency is improved.

In some embodiments, $5/16 \leq K_1/N \leq 7/16$, so that the current carrying capability of the electrode assembly 10 and the temperature difference between the first electrode plate layers 111 are further balanced, the current consistency of the electrode assembly 10 is improved, the fast charge capability of the battery cell 6 is improved, and the cycle life of the battery cell 6 is prolonged.

In some embodiments, $K_1/N$ may be 6/16.

In some embodiments, the number of the first tabs 111a in one first tab group 111b is the same as the number of the first tabs 111a in the other first tab group 111b. Exemplarily, the first tabs 111a in the two first tab groups 111b are distributed symmetrically.

In some embodiments, any two adjacent first tabs 111a in the first tab group 111b are arranged on the two adjacent first electrode plate layers 111. In the embodiment of the present application, the plurality of first tabs 111a in the first tab groups 111b may be more centrally distributed, so that the temperature difference between the first electrode plate layers 111 is reduced.

In some embodiments, the number of the first electrode plate layers 111 located between the two first tab groups 111b and provided with no first tab 111a is $K_2$, and $K_2$ and N satisfy: $1/8 \leq K_2/N \leq 1/2$.

Exemplarily, $2 \times K_1 + K_2 \leq N$.

Exemplarily, $K_2/N$ may be 1/8, 3/16, 4/16, 5/16, 6/16, 7/16 or 1/2.

In the embodiment of the present application, by limiting $K_2/N$ to be less than or equal to 1/2, more first electrode plate layers 111 provided with the first tabs 111a are reserved for the electrode unit 30, the total number of the first tabs 111a is increased, the current carrying capability of the electrode assembly 10 is improved, the current and the temperature rise of each first tab 111a are reduced, and the fast charge capability of the battery cell 6 is improved. In the embodiment of the present application, by limiting $K_2/N$ to be greater than or equal to 1/8, the number of the first tabs 111a away from the heat exchange plates 7 in the first direction Y may be reduced, so that the temperature difference and the impedance difference between the plurality of first electrode plate layers 111 are reduced, and the current consistency is improved.

In some embodiments, $1/8 \leq K_2/N \leq 3/8$, so that the current carrying capability of the electrode assembly 10 and the temperature difference between the first electrode plate layers 111 are further balanced, the current consistency of the electrode assembly 10 is improved, the fast charge capability of the battery cell 6 is improved, and the cycle life of the battery cell 6 is prolonged.

In some embodiments, the shell 20 includes two first shell walls 211 opposite in the first direction Y, and each first shell wall 211 is configured to exchange heat with the heat exchange plate 7. In the first direction Y, the minimum spacing between an outer surface 211a of each first shell wall 211 and the first tab 111a closest to the first shell wall 211 is $D_1$ mm. $K_1$, N and $D_1$ satisfy: $21 \leq 88 \times K_1/N - D_1/5 \leq 38.4$.

The outer surface 211a of the first shell wall 211 may be in direct contact with the heat exchange plate 7. Alternatively, a heat-conducting structure (for example, heat-conducting glue) may also be arranged between the outer surface 211a of the first shell wall 211 and the heat exchange plate 7, and the heat-conducting structure may conduct heat between the first shell wall 211 and the heat exchange plate 7.

Exemplarily, $D_1$ may be a distance between a root of the first tab 111a closest to the first shell wall 211 and the first shell wall 211 in the first direction Y.

Optionally, $88 \times K_1/N - D_1/5$ may be 21, 22, 23, 24, 25, 25.5, 26, 26.9, 28, 29, 30, 31, 32, 33, 34, 35, 36, 37, 38, 38.1, 38.3 or 38.4.

$D_1$ may affect the heat transfer efficiency between the heat exchange plates 7 and the first tabs 111a. It can be understood that the smaller $D_1$ is, the shorter the heat exchange path between the heat exchange plates 7 and the first tabs 111a is, the higher the heat exchange efficiency between the heat exchange plates 7 and the first tabs 111a is, and the lower the temperature rise of the first tabs 111a is.

In the embodiment of the present application, by limiting $88 \times K_1/N - D_1/5$ to be greater than or equal to 21, the number of the first tabs 111a is increased, or the heat conduction path between the first tabs 111a and the heat exchange plates 7 is shortened, so that the heat produced by the first tabs 111a is reduced, the temperature rise of the first tabs 111a is reduced, and the charge and discharge performance of the battery cell 6 is improved. In the embodiment of the present application, by limiting $88 \times K_1/N - D_1/5$ to be less than or equal to 38.4, a difference between a heat conduction path between the first tab 111a on an innermost side in the first tab group 111b and the heat exchange plates 7 and a heat conduction path between the first tab 111a on an outermost side in the first tab group 111b and the heat exchange plates 7 is reduced, a maximum temperature difference between the plurality of first electrode plate layers is reduced, a maximum temperature difference between the plurality of first electrode plate layers 111 is reduced, the current consistency of the electrode assembly 10 is improved, the fast charge capability of the battery cell 6 is improved, and the cycle life of the battery cell 6 is prolonged.

In some embodiments, $26.9 \leq 88 \times K_1/N - D_1/5 \leq 38.3$, so that the temperature rise and the temperature difference of the plurality of first tabs 111a are further balanced, the current consistency of the electrode assembly 10 is improved, the charge and discharge performance of the battery cell 6 is improved, and the cycle life of the battery cell 6 is prolonged.

In some embodiments, the shell 20 includes two first shell walls 211 opposite in the first direction Y, and each first shell wall 211 is configured to exchange heat with the heat exchange plate 7. In the first direction Y, the minimum spacing between an outer surface 211a of each first shell wall 211 and the first tab 111a closest to the first shell wall 211 is $D_1$ mm. $D_1$ is 0.5-5.

In the embodiment of the present application, by limiting $D_1$ to be greater than or equal to 0.5, the thickness and the strength of each first shell wall 211 satisfy the requirement, and the reliability of the battery cell 6 is improved. In the embodiment of the present application, by limiting $D_1$ to be less than or equal to 5, the heat conduction path between the first tabs 111a and the heat exchange plates 7 is shortened, the heat produced by the first tabs 111a is reduced, the temperature rise of the first tabs 111a is reduced, and the charge and discharge performance of the battery cell 6 is improved.

Optionally, $D_1$ may be 0.5, 0.8, 1, 1.5, 2, 2.5, 3, 3.5, 4, 4.5 or 5.

In some embodiments, $D_1$ is 1-3, so that the reliability and the charge and discharge performance of the battery cell 6 are further balanced.

In some embodiments, the shell 20 may be a square shell.

In some embodiments, the shell 20 includes two first shell walls 211 opposite in the first direction Y, two second shell walls 212 opposite in the second direction Z and two third shell walls 213 opposite in a third direction X, where the first direction Y, the second direction Z and the third direction X are perpendicular pairwise. The area of each first shell wall 211 is greater than the area of each second shell wall 212 and greater than the area of each third shell wall 213.

Each first shell wall 211 is a shell wall with a larger area in the shell 20, the first shell walls 211 are used for exchanging heat with the heat exchange plates 7, so that a heat exchange area may be increased, the heat exchange efficiency may be improved, a temperature difference between different regions of the electrode assembly 10 is reduced, and the charge and discharge performance of the battery cell 6 is improved.

In some embodiments, an outer surface 211a of each first shell wall 211 is a plane perpendicular to the first direction Y. Optionally, each first shell wall 211 is of a flat plate structure perpendicular to the first direction Y.

In some embodiments, the shell 20 includes a shell body 21 and an end cover 22. An end of the shell body 21 in the second direction Z has an opening, and the end cover 22 covers the opening. Exemplarily, the shell 21 includes two first shell walls 211, two third shell walls 213, and a bottom wall opposite to the end cover 22 in the second direction Z. The two second shell walls 212 may be a bottom wall 214 and an end cover 22 respectively.

In some embodiments, the two first tab groups 111b are spaced apart in the first direction Y. Ends of the two first tab groups 111b are bent in a direction close to each other and are arranged opposite to each other in the first direction Y.

By making the two first tab groups 111b bent, space may be saved, and a space utilization ratio is improved.

Exemplarily, the first tabs 111a may be arranged at ends of the first electrode plate layers 111 in the second direction Z. By making the two first tab groups 111b bent, the space occupied by the first tab groups 111b in the second direction Z may be reduced, and the space utilization ratio is improved.

In some embodiments, the battery cell 6 further includes an electrode terminal 40, and the electrode terminal 40 is electrically connected to the two first tab groups 111b, so that all the first electrode plate layers 111 are electrically connected to the electrode terminal 40.

In some embodiments, the electrode terminal 40 is directly connected to the first tab groups 111b. Exemplarily, the plurality of first tabs 111a in each first tab groups 111b are stacked on the electrode terminal 40 and welded to the electrode terminal 40. The two first tab groups 111b are connected to different positions of the electrode terminal 40.

Exemplarily, the electrode terminal 40 includes two connection portions arranged in the first direction Y, and the two first tab groups 111b are respectively connected to the two connection portions.

In some other embodiments, the electrode terminal 40 is connected to the two first tab groups 111b through an adapter piece. Exemplarily, the adapter piece includes a terminal connection portion and two tab connection portions, the terminal connection portion is connected to the electrode terminal 40, and the two tab connection portions are spaced apart in the first direction Y and connected to the terminal connection portion.

The two first tab groups 111b are respectively connected to the two tab connection portions.

In some embodiments, the first electrode plate layer 111 in the middlemost portion in the plurality of first electrode plate layers 111 is provided with no first tab 111a, and the first electrode plate layers 111 corresponding to the two first tab groups 111b are located on two sides of the first electrode plate layer 111 in the middlemost portion respectively.

Exemplarily, when the number of first electrode plate layers 111 is an odd number, the number of the first electrode plate layer 111 in the middlemost portion is one; and when the number of first electrode plate layers 111 is an even number, the number of the first electrode plate layers 111 in the middlemost portion is two.

Among all the first electrode plate layers 111, the first electrode plate layer 111 in the middlemost portion is farthest from the heat exchange plates 7. In the embodiment of the present application, the first electrode plate layer 111 in the middlemost portion is provided with no first tab 111a, so temperature rise of the first electrode plate layer 111 in the middlemost portion may be reduced, a temperature difference between the first electrode plate layer 111 in the middlemost portion and the other first electrode plate layers 111 may be reduced, and the current consistency may be improved. The first electrode plate layers 111 corresponding to the two first tab groups 111b are arranged on two sides of the first electrode plate layer 111 in the middlemost portion, so a heat conduction path between each first tab group 111b and the corresponding heat exchange plate 7 may be shortened, thus, the temperature rise of each first tab 111a is reduced, the temperature difference between the two first tab groups 111b is reduced, and the charge and discharge capability of the battery cell 6 is improved.

In some embodiments, each first electrode plate layer 111 includes an electrode plate body 111c, some of the first electrode plate layers 111 are provided with the first tabs 111a extending from ends of the electrode plate bodies 111c in the second direction Z. Exemplarily, each electrode plate body 111c is of a straight structure, and the first direction Y may be a stacking direction of the electrode plate bodies 111c of the plurality of first electrode plate layers 111. Optionally, the electrode plate bodies 111c are perpendicular to the first direction Y.

In some embodiments, the electrode unit 30 includes at least one electrode assembly 10, and each electrode assembly 10 includes a first electrode plate 11 and a second electrode plate 12 which have opposite polarities. The first electrode plate 11 includes at least part of the plurality of first electrode plate layers 111, and a plurality of first electrode plate layers 111 of the first electrode plate 11 form at least one first tab group 111b.

Exemplarily, the electrode unit 30 includes one electrode assembly 10 or two electrode assemblies 10. In a case where the electrode unit 30 includes one electrode assembly 10, the first electrode plate 11 may include all the first electrode plate layers 111. In a case where the electrode unit 30 includes two electrode assemblies 10, a first electrode plate 11 of one electrode assembly 10 may include some of the first electrode plate layers 111, a first electrode plate 11 of the other electrode assembly 10 may include the rest of the first electrode plate layers 111, and correspondingly, the first electrode plates 11 of the two electrode assemblies 10 respectively form the two first tab groups 111b.

The first electrode plate 11 may form at least two first electrode plate layers 111 in a winding, folding or another mode.

In the embodiment of the present application, the first electrode plate 11 is integrity arranged continuously, so the first electrode plate layer 111 provided with no first tab 111a may conduct a current out through a first electrode plate layer 111 arranged on the first tab 111a.

In some embodiments, the first electrode plate 11 and the second electrode plate 12 are wound. Exemplarily, the electrode assembly 10 is of a winding structure.

In some embodiments, the first electrode plate 11, the second electrode plate 12 and the separator 13 wind in a winding direction, and exemplarily, as shown in FIG. 7, the winding direction may be an anticlockwise direction.

In some embodiments, the first electrode plate 11 includes a bent layer 112, and the bent layer 112 is connected to the two adjacent first electrode plate layers 111 in the winding direction. Exemplarily, the bent layer 112 is connected to the electrode plate body 111c.

In some embodiments, the electrode assembly 10 includes a straight region 10a and two bent regions 10b, and the two bent regions 10b are located on two sides of the straight region 10a in the third direction X. The bent layer 112 of the first electrode plate 11 may be located in the bent region 10b, and the electrode plate body 111c is located in the straight region 10a.

A size of the straight region 10a in the third direction X may be W. Exemplarily, the number of first electrode plate layers 111 is counted based on a standard that a size in the third direction X exceeds 0.5W. In other words, the size of the first electrode plate layer 111 in the third direction X is at least greater than 0.5W.

In some embodiments, the electrode unit 30 includes two electrode assemblies 10, and the two electrode assemblies 10 are arranged in the first direction Y. Each electrode assembly 10 includes one first tab group 111b.

Exemplarily, each electrode assembly 10 includes one first electrode plate 11, and one first electrode plate 11 includes one first tab group 111b.

The two electrode assemblies 10 are arranged, so that the number of the first electrode plate layers 111 of a single one electrode assembly 10 may be reduced, and the risk of displacement of the first tabs 111a during a formation process of the electrode assembly 10 is reduced.

In some embodiments, the number of the first electrode plate layers 111 in one electrode assembly 10 is the same as the number of the first electrode plate layers 111 in the other electrode assembly 10.

In some embodiments, the two electrode assemblies 10 are symmetrical with respect to a plane perpendicular to the first direction Y.

In some embodiments, the electrode unit 30 includes a plurality of second electrode plate layers 121, the polarity of the second electrode plate layers 121 is opposite to the polarity of the first electrode plate layers 111, and the second electrode plate layers 121 and the first electrode plate layers 111 are stacked in the first direction Y. Some of the second electrode plate layers 121 are provided with second tabs 121a and form two second tab groups 121b, each second tab group 121b includes a plurality of second tabs 121a stacked and connected to one another, and the second electrode plate layer 121 which is provided with no second tab 121a is provided between the two second tab groups 121b.

Exemplarily, the second electrode plate 12 forms at least two second electrode plate layers 121 in a winding or folding mode.

Among all the second electrode plate layers 121, some of the second electrode plate layers 121 are provided with second tabs 121a, and the rest of second electrode plate layers 121 are provided with no second tab 121a.

The plurality of second tabs 121a in each second tab group 121b may be connected in a welding, bonding or another mode.

The number of the second tabs 121a in one second tab group 121b may be the same as the number of the second tabs 121a in the other second tab group 121b or not.

The two second tab groups 121b are electrically connected, so that all the second electrode plate layers 121 are electrically connected. Exemplarily, the two second tab groups 121b may be directly connected, or indirectly connected through another conductive structure.

The heat exchange plates 7 located on the two sides of the shell 20 are arranged close to the two second tab groups 121b respectively. During the charge and discharge process of the battery 2, the heat exchange plates 7 may absorb heat produced by the two second tab groups 121b through the shell 20, so that temperature rise of each second tab 121a is reduced, and a temperature difference between the plurality of second electrode plate layers is reduced. The second electrode plate layer 121 located between the two second tab groups 121b is provided with no second tab 121a, so temperature rise of the second electrode plate layer 121 located between the two second tab groups 121b is also small though the second electrode plate layer 121 located between the two second tab groups 121b is far away from the heat exchange plate 7, so that a temperature difference between the plurality of second electrode plate layers 121 is reduced. In the embodiment of the present application, the heat exchange plates 7 are arranged on the two sides of the shell 20 at the same time, part of second tabs 121a in a middle of the electrode unit are removed, so as to reduce a temperature difference and an impedance difference between the different second electrode plate layers 121, improve current consistency, improve charge and discharge performance of the battery cell 6 and prolong the cycle life of the battery cell 6.

In some embodiments, in the first direction Y, each second electrode plate layer 121 at least partially overlaps with the heat exchange plate 7.

In some embodiments, the total number of the second electrode plate layers 121 is M, the number of the second tabs 121a in each second tab group 121b is $K_3$, and $K_3$ and M satisfy: $1/4 \leq K_3/M \leq 7/16$.

M and N may be the same or not.

The number $K_3$ of the second tabs 121a in one second tab group 121b may the same as the number $K_3$ of the second tabs 121a in the other second tab group 121b or not. Though the number $K_3$ of the second tabs 121a in one second tab group 121b may be not the same as the number $K_3$ of the second tabs 121a in the other second tab group 121b, the number $K_3$ of the second tabs 121a in each second tab group 121b satisfies $1/4 \leq K_3/M \leq 7/16$.

Optionally, $K_3/M$ is 1/4, 9/32, 5/16, 11/32, 6/16, 13/32 or 7/16.

In the embodiment of the present application, by limiting $K_3/M$ to be greater than or equal to 1/4, the total number of the second tabs 121a may be increased, the current carrying capability of the electrode assembly 10 is improved, the current and the temperature rise of each second tab 121a are reduced, and the fast charge capability of the battery cell 6 is improved. In the embodiment of the present application, by limiting $K_3/M$ to be less than or equal to 7/16, the number of the second tabs 121a away from the heat exchange plates 7 in the first direction Y may be reduced, so that the temperature difference and the impedance difference between the plurality of second electrode plate layers 121 are reduced, and the current consistency is improved.

In some embodiments, $5/16 \leq K_3/M \leq 7/16$, so that the current carrying capability of the electrode assembly 10 and the temperature difference between the second electrode plate layers 121 are further balanced, the current consistency of the electrode assembly 10 is improved, the fast charge capability of the battery cell 6 is improved, and the cycle life of the battery cell 6 is prolonged.

In some embodiments, the number of the second tabs 121a in one second tab group 121b is the same as the number of the second tabs 121a in the other second tab group 121b.

In some embodiments, any two adjacent second tabs 121a in each second tab group 121b are arranged on the two adjacent second electrode plate layers 121. In the embodiment of the present application, the plurality of second tabs 121a in each second tab group 121b may be more centrally distributed, so that the temperature difference between the second electrode plate layers 121 is reduced.

In some embodiments, the number of second electrode plate layers 121 located between the two second tab groups 121b and provided with no second tab 121a is $K_4$, and $K_4$ and M satisfy: $1/8 \leq K_4/M \leq 1/2$.

Exemplarily, $K_2/N$ may be 1/8, 3/16, 4/16, 5/16, 6/16, 7/16 or 1/2.

In the embodiment of the present application, by limiting $K_4/M$ to be less than or equal to 1/2, more second electrode plate layers 121 provided with the second tabs 121a are reserved for the electrode unit 30, the total number of the second tabs 121a is increased, the current carrying capability of the electrode assembly 10 is improved, the current and temperature rise of each second tab 121a are reduced, and the fast charge capability of the battery cell 6 is improved. In the embodiment of the present application, by limiting $K_4/M$ to be greater than or equal to 1/8, the number of the second tabs 121a away from the heat exchange plates 7 in the first direction Y may be reduced, so that the temperature difference and the impedance difference between the plurality of second electrode plate layers 121 are reduced, and the current consistency is improved.

In some embodiments, $1/8 \leq K_4/M \leq 3/8$, so that the current carrying capability of the electrode assembly 10 and the temperature difference between the second electrode plate layers 121 are further balanced, the current consistency of the electrode assembly 10 is improved, the fast charge capability of the battery cell 6 is improved, and the cycle life of the battery cell 6 is prolonged.

In some embodiments, in the first direction Y, the minimum spacing between the outer surface 211a of the first shell wall 211 and the second tab 121a closest to the first shell wall 211 is in a range from 0.5 mm to 5 mm. Optionally, the minimum spacing between the outer surface 211a of the first shell wall 211 and the second tab 121a closest to the first shell wall 211 is in a range from 1 mm to 3 mm.

In some embodiments, each first tab 111a is a negative electrode tab, and each second tab 121a is a positive electrode tab. The number of the first tabs 111a in the first tab group 111b is greater than the number of the second tabs 121a in the second tab group 121b.

In the embodiment of the present application, the number of of the first tabs 111a is different from the number of the second tabs 121a, so that a current carrying capability of a positive electrode and a current carrying capability of a negative electrode may be designed differentially as required to meet design demands.

In some embodiments, each first tab 111a is s copper tab, each second tab 121a is an aluminum tab, and a sum of cross-sectional areas of all the second tabs 121a is A1 with a unit of $mm^2$. A sum of cross-sectional areas of all the first tabs 111a is A2 with a unit of $mm^2$. $A1 \leq 2.5A2$.

In the embodiment of the present application, through overall consideration for a fusing point, resistivity and a current flow area of the copper tab and the aluminum tab, A1/A2 is limited to be less than or equal to 2.5, and the aluminum tab may be fused broken earlier than the copper tab when there is overcurrent (for example, when a short circuit occurs), thereby cutting off a circuit in time and reducing the safety risk.

In some embodiments, $A1 \leq 1.5A2$, so that on the premise of the aluminum tab satisfying normal current flow, the aluminum tab is fused broken faster when there is ocercurrent, thereby cutting off the circuit in time and reducing the safety risk.

In some embodiments, the battery cell 6 may be a fast charge battery cell.

In some embodiments, an average charging rate of the battery cell 6 is x, namely, the battery cell 6 may achieve xC fast charge. Optionally, $x \geq 2$, for example, x is 2, 3, 4, 5 or 6.

Exemplarily, taking 4C fast charge as an example, the battery cell 6 may be tested for fast charge according to the following method:

(i) making the battery cell 6 stand for 10 minutes, and then charging the battery cell 6 to 97% SOC (State Of Charge) with an equivalent current of 4C;
(ii) after standing for 30 minutes, discharging the battery cell 6 to 3% SOC at a constant current of 1C;
(iii) repeating steps (i) and (ii) 50 times;
(iv) charging the battery cell 6 to 97% SOC with an equivalent current of 4C; and
(v) disassembling the battery cell 6 and taking the lithium-ion battery cell 6 as an example to observe the lithium precipitation on a surface of a negative electrode plate. Exemplarily, the negative electrode plate is flattened, and a total area S1 of the negative electrode active material layer on one side of the negative electrode plate is measured; a maximum size a of each lithium precipitation point on the negative electrode active material layer (there is no lithium precipitation around the lithium precipitation point) in a length direction of the negative electrode plate is measured, and a maximum size b of each lithium precipitation point in a width direction of the negative electrode plate is measured, a/2 is taken as a median value of the lithium precipitation point in the length direction, and b/2 is taken as a median value of the lithium precipitation point in the width direction, and the area of the lithium precipitation point is $a \times b/4$. A sum of areas of all lithium precipitation points is S2, and if $S2/S1 \leq 5\%$, it is believed that the battery cell 6 satisfies the 4C fast charge requirement.

When one battery cell 6 is charged from $F_1$ SOC to $F_2$ SOC with a constant current or a variable current, the charging time is only 1/4 hour, and this current magnitude is called an equivalent 4C current. (For example, in the above test method: it only takes 15 minutes to charge the battery cell 6 from 3% SOC to 97% SOC, and the corresponding current magnitude is called the equivalent 4C current).

It can be understood that the test method of xC fast charging is the same as above, and the battery is to be charged with an equivalent xC current.

In some embodiments, the first electrode plate 11 is a negative electrode plate. When the battery cell 6 is fast charged, the first tabs 111a produce more heat. In the embodiment of the present application, by arranging the heat exchange plates 7 and the two first tab groups 111b, the temperature rise of the first tabs 111a may be reduced during the fast charge process, the temperature consistency of the electrode assembly 10 is improved, and the fast charge performance of the battery cell 6 is improved.

In some embodiments, the first electrode plate 11 includes a negative electrode current collector 11a and a negative electrode active material layer 11b coats a surface of the negative electrode current collector 11a.

Exemplarily, each first electrode plate layer 111 includes a portion of the negative electrode current collector 11a and a portion of the negative electrode active material layer 11b. The negative electrode current collector 11a includes a plurality of uncoated regions that are not coated with an active material layer, and the uncoated regions may be the first tabs 111a.

In some embodiments, the negative electrode active material layer 11b includes a negative electrode active material, a binder and a conductive agent.

In some embodiments, the coating weight per unit area of the negative electrode active material layer 11b is less than or equal to 150 mg/1540.25 mm$^2$.

Exemplarily, a sample coated with the negative electrode active material layer 11b on only one side is cut out from the negative electrode plate, and the sample is a 1540.25 mm$^2$ round piece. A weight G1 of the sample is measured in a unit of mg. Then, the negative electrode active material layer 11b of the sample is removed, and the remaining negative electrode current collector 11a is weighed to obtain a weight G2 with a unit of mg. The coating weight per unit area of the negative electrode active material layer 11b may be G1-G2.

In the embodiment of the present application, the coating weight per unit area of the negative electrode active material layer 11b is small, and the negative electrode active material layer 11b may have a smaller thickness, so that resistance of ion intercalation into the negative electrode active material layer 11b is reduced during charging, and the charging efficiency of the battery cell 6 is improved.

In some embodiments, the first electrode plate 11 includes a negative electrode active material.

Exemplarily, the negative electrode active material includes at least one of graphite, hard carbon, soft carbon, silicon oxide, or silicon carbide.

In some embodiments, a volume distribution particle size Dv50 of the negative electrode active material is ≤15 μm. The volume distribution particle size of the negative electrode active material is smaller, and the negative electrode active material has more active reaction sites, which can receive ions faster, thereby improving the charging efficiency of the battery cell 6 and improving the fast charge capability of the battery cell 6.

Unless otherwise specified, the particle size distribution parameter Dv50 of the negative electrode active material determined by a particle size distribution measurement value in the present application is determined by a particle size analyzer-laser diffraction method. Specifically, reference can be made to the standard GB/T 19077-2016, using a Malvern laser particle size analyzer (model: Master Size 3000) and measuring according to the manufacturer's instructions.

Optionally, the volume distribution particle size Dv50 of the negative electrode active material may be 1 μm, 3 μm, 5 μm, 8 μm, 10 μm, 12 μm, 14 μm or 15 μm.

In some embodiments, the volume distribution particle size Dv50 of the negative electrode active material is ≤10 μm.

In some embodiments, a specific surface area of the negative electrode active material is in a range from 0.5 m$^2$/g to 5 m$^2$/g. Optionally, the specific surface area of the negative electrode active material is 0.5 m$^2$/g, 1 m$^2$/g, 1.5 m$^2$/g, 2 m$^2$/g, 2.5 m$^2$/g, 3 m$^2$/g, 3.5 m$^2$/g, 4 m$^2$/g, 4.5 m$^2$/g or 5 m$^2$/g.

Unless otherwise specified, in the present application, the specific surface area is determined by using the specific surface area meter-static volume method with reference to the standard GB/T 19587-2017. Specifically, according to the embodiments of the present application, a ratio surface and porosity analyzer (instrument model: American Micromeritics TriStar 3020) may be used for measurement according to the manufacturer's instructions.

In the embodiment of the present application, the number of ion intercalation sites of the negative electrode active material may be increased, a rate of ion intercalation into the negative electrode active material may be increased, thus, the charging efficiency of the battery cell 6 is improved, and the fast charge capability of the battery cell 6 is improved.

In some embodiments, the battery cell 6 further includes an electrolyte accommodated in the shell 20, and an ionic conductivity of the electrolyte is in a range from 9 mS/cm to 16 mS/cm.

According to the embodiments of the present application, the conductivity of the electrolyte may be detected by using a conductivity meter in accordance with standard HG/T 4067-2015. Specifically, the resistance of the electrolyte may be tested at a constant temperature of 25±0.1°C and an alternating current resistance of 1kHz to calculate the conductivity of the electrolyte.

Optionally, the ionic conductivity of the electrolyte may be 9 mS/cm, 10 mS/cm, 11 mS/cm, 12 mS/cm, 13 mS/cm, 14 mS/cm, 15 mS/cm or 16 mS/cm.

The electrolyte in the embodiment of the present application has good ionic conductivity, which may reduce the impedance of the battery cell 6 and increase a migration rate of ions, thereby improving the charging efficiency of the battery cell 6 and improving the fast charge capability of the battery cell 6.

In some embodiments, the electrolyte includes a low-viscosity solvent to reduce resistance to ion migration.

In some embodiments, the directive current resistance (DCR) of the battery cell 6 is less than or equal to 0.4 milliohm.

Exemplarily, the direct current resistance of the battery cell 6 may be measured according to the following method:

(i) charging a battery cell with a capacity of Cn (in Ah) to 100% SOC at 25°C at a current of 0.33Cn (in A);

(ii) after standing for 30 minutes, discharging the battery cell to 50% SOC at a current of 0.33Cn;

(iii) after standing for 60 minutes, discharging the battery cell at a current of 4Cn (in A) for 30 seconds; and extracting a battery cell voltage V0 (in mV) before discharge and a battery cell voltage V1 (in mV) at the 10th second of discharge; and

(iv) obtaining DCR = (V0-V1)/4Cn through calculation.

In the embodiment of the present application, the battery cell 6 has small direct current resistance, thereby improving the migration rate of the ions, improving the charging efficiency of the battery cell 6, and improving the fast charge capability of the battery cell 6.

In some embodiments, each first electrode plate layer 111 includes an electrode plate body 111c, some of the first electrode plate layers 111 are provided with the first tabs 111a extending from ends of the electrode plate bodies 111c in the second direction Z, where the second direction Z is perpendicular to the first direction Y. Each electrode plate body 111c at least partially overlaps with the heat exchange plate 7 in the first direction Y.

Exemplarily, each electrode plate body 111c is provided with an active material layer. A thickness of each electrode plate body 111c is greater than a thickness of the first tab 111a.

Each electrode plate body 111c may be a portion of the first electrode plate layer 111 where a reaction with the electrolyte occurs, and the heat produced by the first tabs 111a may be conducted to the heat exchange plate 7 through the electrode plate body 111c. In the embodiment of the present application, by adjusting an arrangement mode of the first tabs 111a, a temperature difference between the plurality of electrode plate bodies 111c may be reduced, influence of the temperature to the resistance of the electrode plate bodies 111c, the current consistency is improved, and charge and discharge capability of the battery cell 6 is improved.

In some embodiments, the first tab 111a closest to a first shell wall 211 in the first tab group 111b may be called the outermost first tab, and spacing between a root of the outermost first tab connected to the electrode plate body 111c and the outer surface 211a of the corresponding first shell wall 211 is $D_1$.

In some embodiments, in the second direction Z, each heat exchange plate 7 has a size of $H_1$, each electrode plate body 111c has a size of $H_2$, and $0.6 \leq H_1/H_2 \leq 1.2$.

In the embodiment of the present application, by setting $H_1/H_2$ to be greater than or equal to 0.6, the heat exchange area between the heat exchange plates 7 and the electrode plate bodies 111c is increased, the heat exchange efficiency is increased, a temperature variation of the electrode plate bodies 111c during the charge and discharge process is reduced, and the charge and discharge capability of the battery cell 6 is improved. In the embodiment of the present application, by setting $H_1/H_2$ to be less than or equal to 1.2, waste of the heat exchange capability of the heat exchange plates 7 is reduced, the weights and the sizes of the heat exchange plates 7 are reduced, and the energy density of the battery 2 is improved.

Optionally, $H_1/H_2$ may be 0.6, 0.7, 0.8, 0.9, 1.0, 1.1 or 1.2.

\In some embodiments, $0.8 \leq H_1/H_2 \leq 1.1$, so that the heat exchange capability of the heat exchange plates 7 and the sizes of the heat exchange plates 7 are further balanced, and on the premise of satisfying the requirement for the heat exchange capability, the sizes of the heat exchange plates 7 are reduced, and the energy density of the battery 2 is improved.

In some embodiments, in the second direction Z, spacing between an edge of each electrode plate body 111c close to the first tab 111a and an edge of each heat exchange plate 7 close to the first tab 111a is $L_1$, and $L_1 \leq 20$ mm.

Exemplarily, in the second direction Z, the edge of the heat exchange plate 7 close to the first tab 111a may exceed the electrode plate body 111c or not.

In a case where the edge of each electrode plate body 111c close to the first tab 111a exceeds the edge of each heat exchange plate 7 close to the first tab 111a, in the embodiment of the present application, $L_1$ is limited to be less than or equal to 20 mm, the heat exchange plate 7 may approach a connection position of the first tab 111a and the electrode plate body 111c as close as possible, namely, the heat exchange plate 7 may approach a position with larger temperature rise as soon as possible, thus, the temperature rise of the electrode assembly 10 is reduced, and the cycle performance of the battery cell 6 is improved. In a case where the edge of each heat exchange plate 7 close to the first tab 111a exceeds the edge of each electrode plate body 111c close to the first tab 111a, in the embodiment of the present application, $L_1$ is limited to be less than or equal to 20 mm, an excessive design for the heat exchange plate 7 may be reduced, a space and weight of the heat exchange plate 7 are reduced, and the energy density is improved.

Optionally, $L_1$ may be 0 mm, 1 mm, 3 mm, 5 mm, 8 mm, 10 mm, 13 mm, 15 mm, 18 mm or 20 mm.

In some embodiments, $L_1 \leq 15$mm, so that the temperature rise of the electrode assembly 10 is further reduced, the cycle performance of the battery cell 6 is improved, and the energy density is improved.

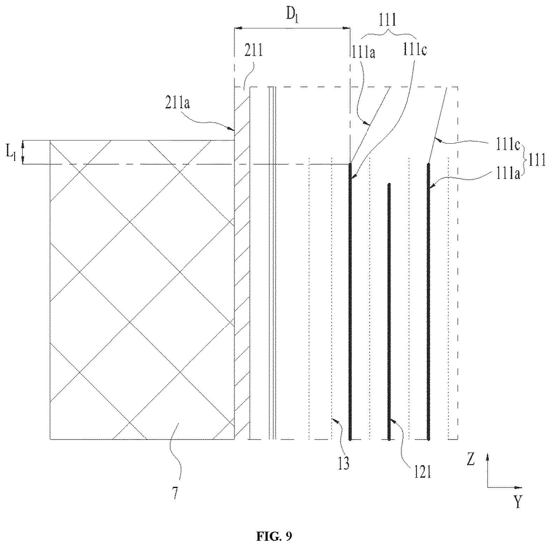

FIG. 9 is a schematic partial section view of a battery provided by some other embodiments of the present application.

As shown in FIG. 9, in some embodiments, in the second direction Z, the edge of the heat exchange plate 7 close to the first tab 111a exceeds the edge of the electrode plate body 111c close to the first tab 111a.

In the first direction Y, each heat exchange plate 7 may cover a connection position of a main body portion and the first tab 111a, so as to shorten a heat transfer path between the first tab 111a and the heat exchange plate 7, reduce the temperature rise of the connection position of the main body portion and the first tab 111a, and improve the cycle performance of the battery cell 6.

Alternatively, in some embodiments, in the second direction Z, the edge of each heat exchange plate 7 close to the first tab 111a is flush with the edge of each electrode plate body 111c close to the first tab 111a, so that the heat exchange efficiency may be improved, the size of the heat exchange plate 7 may be reduced, and the energy density may be improved.

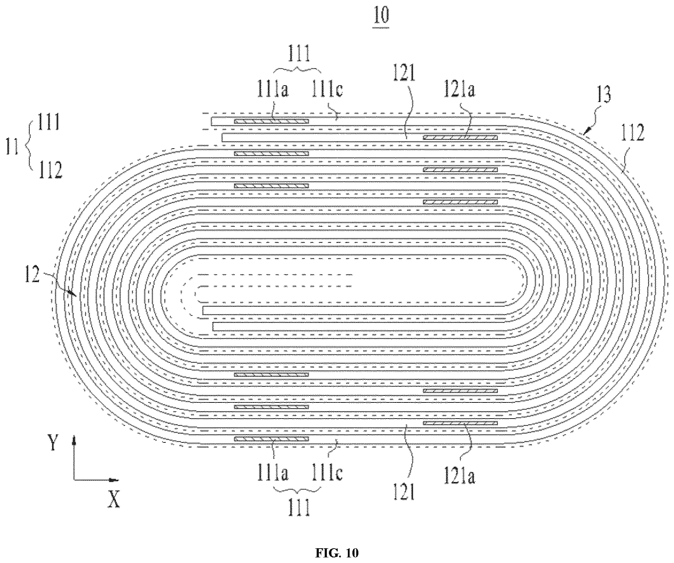

FIG. 10 is a schematic diagram of an electrode assembly of a battery cell provided by some other embodiments of the present application.

As shown in FIG. 10, in some embodiments, the electrode unit 30 includes one electrode assembly 10. The first electrode plate 11 of the electrode assembly 10 includes all the first electrode plate layers 111, and correspondingly, the first electrode plate 11 includes the two first tab groups 111b.

The second electrode plate 12 includes all the second electrode plate layers 121, and correspondingly, the second electrode plate 12 includes the two second tab groups 121b.

In some embodiments, the electrode assembly 10 is of a winding structure. Innermost circles of winding of the first electrode plate 11 are provided with no first tab 111a. Innermost circles of winding of the second electrode plate 12 are provided with no second tab.

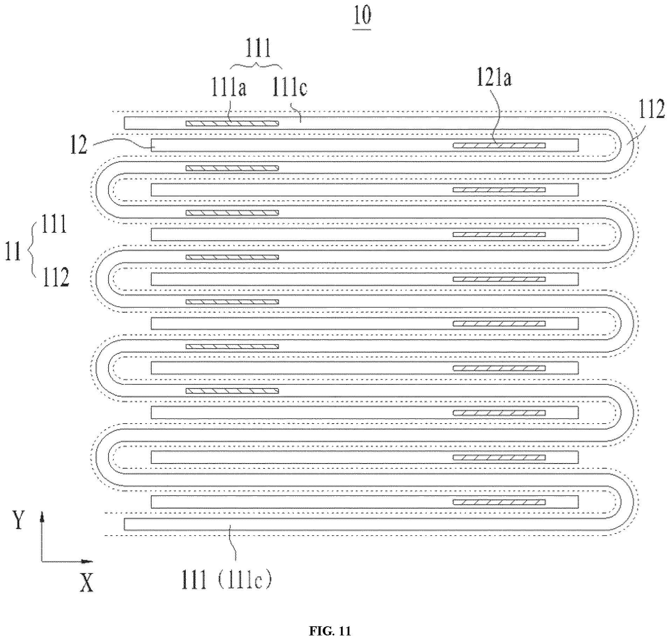

FIG. 11 is a schematic diagram of an electrode assembly of a battery cell provided by yet some other embodiments of the present application.

As shown in FIG. 11, in some embodiments, the electrode assembly 10 includes a plurality of second electrode plates 12, the first electrode plate layers 111 of the first electrode plate 11 and the second electrode plates 12 are arranged alternately in the first direction Y, the first electrode plate 11 includes a bent layer 112, and the bent layer 112 is connected with two adjacent first electrode plate layers 111.

The first electrode plate 11 adopts a continuous bent structure to form the plurality of first electrode plate layers 111.

In some embodiments, the electrode unit 30 includes two electrode assemblies 10.

In some embodiments, the plurality of second electrode plates 12 are arranged independently, and each second electrode plate 12 is provided with the second tabs 121a.

According to some embodiments of the present application, the present application further provides an electrical apparatus, including the battery in any of above embodiments, and the battery is configured to provide electric energy for the electrical apparatus. The electrical apparatus may be any of the aforementioned devices or systems in which the battery is applied.

Referring to FIG. 4 to FIG. 8, an embodiment of the present application provides a battery 2, including a heat exchange plate 7 and a battery cell 6.

The battery cell 6 includes a shell 20 and two electrode assemblies 10 accommodated in the shell 20, and the two electrode assemblies 10 are arranged in the first direction Y. Each electrode assembly 10 includes a first electrode plate 11 and a second electrode plate 12 which are wound, and the first electrode plate 11 and the second electrode plate 12 have opposite polarities.

Each first electrode plate 11 includes 0.5N first electrode plate layers 111 stacked in the first direction Y. $K_1$ first electrode plate layers 111 of the first electrode plate 11 are provided with the first tabs 111a, $K_1$ is less than 0.5N, N is a positive even number, and $K_1$ is a positive integer greater than 1. $K_1$ first tabs 111a of each first electrode plate 11 are stacked and connected to form the first tab group 111b.

Each first electrode plate 11 further includes $0.5K_2$ first electrode plate layers 111 provided with no first tab 111a, and $K_2$ is a positive even number. The $0.5K_2$ first electrode plate layers 111 of one electrode assembly 10 are located on one sides of the $K_1$ first electrode plate layers 111 close to the other electrode assembly 10 in the first direction Y.

$$1/8 \leq K_2/N \leq 3/8, \text{ and } 5/16 \leq K_1/N \leq 7/16.$$

The plurality of heat exchange plates 7 are arranged in the first direction Y. The shell 20 is arranged between the adjacent heat exchange plates 7 and can exchange heat with the heat exchange plates 7. In the first direction Y, each first electrode plate layer 111 at least partially overlaps with the heat exchange plate 7.

The shell 20 includes two first shell walls 211 opposite in the first direction Y, and each first shell wall 211 is configured to exchange heat with the heat exchange plate 7. In the first direction Y, the minimum spacing between an outer surface 211a of each first shell wall 211 and the first tab 111a closest to the first shell wall 211 is $D_1$ mm. $D_1$ is 0.5-5.

Each first electrode plate layer 111 includes an electrode plate body 111c, some of the first electrode plate layers 111 are provided with the first tabs 111a extending from ends of the electrode plate bodies 111c in the second direction Z, where the second direction Z is perpendicular to the first direction Y. Each electrode plate body 111c at least partially overlaps with the heat exchange plate 7 in the first direction Y.

In the second direction Z, each heat exchange plate 7 has a size of H1, each electrode plate body 111c has a size of H2, and 0.8≤H1/H2≤1.1.

**Embodiment**

The following embodiments more specifically describe the contents disclosed in the present application. These embodiments are intended for illustrative purposes only, because various modifications and changes made within the scope of the contents disclosed in the present application will be apparent to those skilled in the art. Unless otherwise stated, all parts, percentages, and ratios reported in the following embodiments are based on the mass, all reagents used in the embodiments are either commercially available or synthesized according to conventional methods, and can be directly used without further processing, and all the instruments used in the embodiments are commercially available.

Embodiment 1

(i) graphite of a negative electrode active substance or a mixture obtained by mixing graphite and other active substance in different mass ratios, acetylene black of a conductive agent, a thickener CMC, a binder SBR and mixed in a mass ratio of 96.4:1:1.2:1.4, an obtained mixture is added into deionized water of a solvent and stirred under an action of a vacuum mixer till a system is in a uniform state, and then a negative electrode slurry is obtained; and the negative electrode slurry is uniformly applied onto a copper foil, dried in the air in a room temperature, then transferred to an oven for continuing to dry, and then subjected to cold pressing, slitting and slicing to obtain a first electrode plate.

(ii) A positive electrode active material NCM523, acetylene black of a conductive agent, and a binder PVDF are mixed in a mass ratio of 96:2:2, an obtained mixture is added into a solvent NMP and stirred under an action of a vacuum mixer till a system is in an uniform state, and then a positive electrode slurry is obtained; and the positive electrode slurry is uniformly applied onto the copper foil, dried in the air in a room temperature, then transferred to an oven for continuing to dry, and then subjected to cold pressing, slitting and slicing to obtain a second electrode plate. The positive electrode slurry is solidified to form an active material layer.

(iii) Ethylene carbonate (EC), ethyl methyl carbonate (EMC) and diethyl carbonate (DEC) are mixed in a volume ratio of 1:1:1 to obtain an organic solvent, and then, a fully dried lithium salt LiPF6 is dissolved in a mixed organic solvent to prepare an electrolyte solution with a concentration of 1 mol/L.

(iv) a polypropylene film with a thickness of 12 $\mu$m is used as a separator.

(v) The first electrode plate, the separator and the second electrode plate are stacked together and winded to form a flat electrode assembly.

(vi) Two electrode assemblies are placed in a shell, and then a battery cell is obtained after processes such as liquid injection, standing, formation, and shaping.

(vii) The battery cell is arranged between two heat exchange plates, and the heat exchange plates and the battery cell are bound by heat-conducting glue.

In each electrode assembly of the obtained battery cell, the first electrode plate includes 0.5N first electrode plate layers stacked in a first direction. $K_1$ first electrode plate layers of the first electrode plate are provided with first tabs, $K_1$ is less than 0.5N, N is a positive even number, and $K_1$ is a positive integer greater than 1. $K_1$ first tabs of each first electrode plate are stacked and connected to form a first tab group. Each first electrode plate further includes 0.5$K_2$ first electrode

plate layers provided with no first tab, and $K_2$ is a positive even number. The $0.5K_2$ first electrode plate layers of one electrode assembly are located on one sides of the $K_1$ first electrode plate layers close to the other electrode assembly in the first direction. $K_1/N$ is 9/32, and $K_2/N$ is 7/16.

In each electrode assembly of the obtained battery cell, the second electrode plate includes 0.5M second electrode plate layers stacked in the first direction. $K_3$ second electrode plate layers of the second electrode plate are provided with second tabs, $K_3$ is less than 0.5M, M is a positive even number, and $K_3$ is a positive integer greater than 1. $K_3$ second tabs of each second electrode plate are stacked and connected to form a second tab group. Each second electrode plate further includes $0.5K_4$ second electrode plate layers provided with no second tab, and $K_4$ is a positive even number. The $0.5K_4$ second electrode plate layers of one electrode assembly are located on one sides of the $K_3$ second electrode plate layers close to the other electrode assembly in the first direction. $K_3/M$ is 1/4, and $K_4/M$ is 1/2.

In addition, referring to FIG. 3 to FIG. 8, $D_1$ is 0.7 mm, and $H_1/H_2$ is 1.

Embodiments 2 to 12

Methods for preparing a battery in Embodiments 2 to 12 may refer to Embodiment 1. Differences between Embodiments 2 to 12 and Embodiment 1 are shown in Table 1.

Comparative example 1

A method for preparing a battery cell in Comparative example 1 may refer to Embodiment 1. A difference between Comparative example 1 and Embodiment 1 is shown in Table 1.

**Testing parts**

During preparation of the battery cell, temperature sensing wires are arranged at a plurality of detection sites of the electrode assembly and can detect and record an actual temperature at each detection site inside the battery cell when the battery cell is fast charged at 20° and equivalent 4C, and thus a maximum temperature, a minimum temperature and a maximum temperature difference of the plurality of detection sites are obtained. During charging, cooling water of 20°C flows through interior of the heat exchange plate at a flow rate of 2 L/min. Data obtained in Embodiments 1 to 12 and Comparative example 1 is shown in Table 1.

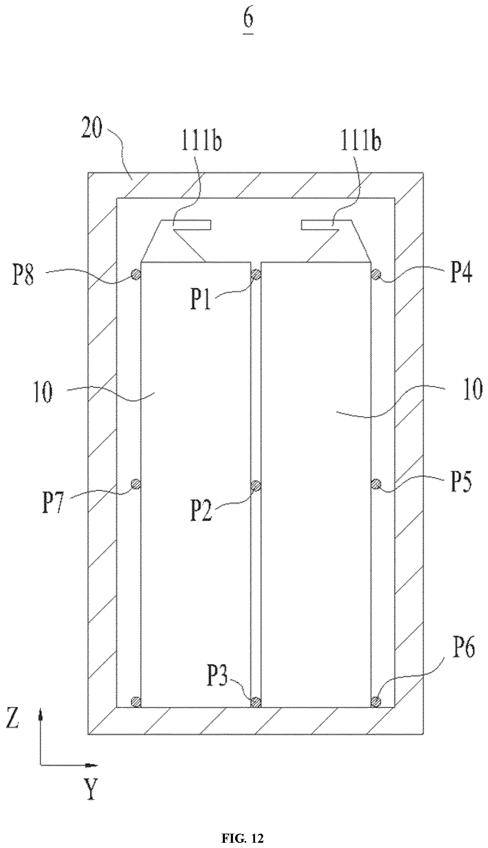

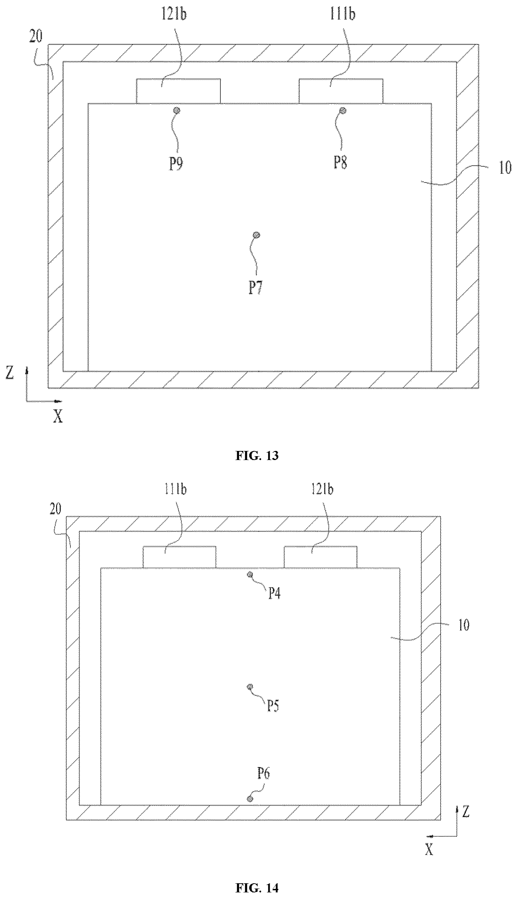

FIG. 12 to FIG. 14 are schematic diagrams of a battery cell at different angles in some embodiments of the present application, which show a plurality of detection sites. Exemplarily, the detection sites P1, P2, P3 are located between two electrode assemblies 10 in the first direction Y, arranged from top to bottom in the second direction Z, and located in the middle of the electrode assembly 10 in the third direction X. The detection sites P4, P5, and P6 are located on an outer side of the right electrode assembly 10 in FIG. 12, are arranged from top to bottom in the second direction Z, and are located in the middle of the electrode assembly 10 in the third direction X. The detection site P7 is located at a center of an outer surface of the left electrode assembly 10 in FIG. 12. The detection site P8 is located on the outer surface of the left electrode assembly 10 in FIG. 12 and is arranged close to the first tab group 111b. The detection site P9 is located on the outer surface of the left electrode assembly 10 and is arranged close to the second tab group 121b.

Table 1

| | $K_1/N$ | $K_2/N$ | $D_1$ | $88 \times K_1/N - D_1/5$ | Maximum temperature (°C) | Minimum temperature (°C) | Maximum temperature difference (°C) |
|---|---|---|---|---|---|---|---|
| Embodiment 1 | 9/32 | 7/16 | 0.7 | 24.61 | *50.4* | 33.3 | 17.1 |
| Embodiment 2 | 10/32 | 6/16 | 0.7 | 27.36 | 49.1 | 31.5 | 17.6 |
| Embodiment 3 | 12/32 | 4/16 | 0.7 | 32.86 | 46.3 | 30.7 | 15.6 |
| Embodiment 4 | 14/32 | 2/16 | 0.5 | 38.4 | 44.0 | 27.9 | 16.1 |
| Embodiment 5 | 12/32 | 4/16 | 1 | 32.80 | 46.1 | 29.2 | 16.9 |
| Embodiment 6 | 12/32 | 4/16 | 1.5 | 32.70 | 45.7 | 28.6 | 17.1 |
| Embodiment 7 | 12/32 | 4/16 | 3 | 32.40 | 46.1 | 27.9 | 18.2 |
| Embodiment 8 | 12/32 | 4/16 | 4 | 32.20 | 47.1 | 27.1 | 20.0 |
| Embodiment 9 | 12/32 | 4/16 | 4.5 | 32.10 | 47.3 | 26.5 | 20.8 |

(continued)

| | $K_1/N$ | $K_2/N$ | $D_1$ | $88 \times K_1/N - D_1/5$ | Maximum temperature (°C) | Minimum temperature (°C) | Maximum temperature difference (°C) |
|---|---|---|---|---|---|---|---|
| Embodiment 10 | 12/32 | 4/16 | 5 | 32 | 50.5 | 26.3 | 24.2 |
| Embodiment 11 | 8/32 | 8/16 | 0.7 | 21.86 | 51.6 | 33.8 | 17.8 |
| Embodiment 12 | 15/32 | 1/16 | 0.7 | 41.11 | 50.5 | 26.9 | 23.6 |
| Comparative example 1 | 16/32 | 0 | 0.7 | 43.86 | 51.4 | 26.4 | 25.0 |

Referring to Table 1, each first electrode plate layer of Comparative example 1 is provided with first tabs, resulting in a larger maximum temperature difference inside a battery cell. Referring to Comparative example 1 and Embodiments 1 to 12, removing part of the first tabs on the electrode assembly can reduce the temperature difference, reduce the impedance difference, improve the current consistency, improve the charge and discharge performance of the battery cell, and prolong the cycle life of the battery cell.

Referring to Embodiments 1 to 12, by limiting $K_1/N$ to be 1/4 to 7/16, the maximum temperature difference may be reduced. Further, by limiting $K_1/N$ to be 5/16 to 7/16, the maximum temperature of the electrode assembly may be reduced, and the temperature difference of the electrode assembly is reduced.

Although the present application is described with reference to the preferred embodiments, without departing from the scope of the present application, various improvements may be made to the present application and parts therein may be replaced with equivalents, in particular, the various technical features mentioned in each embodiment may be combined in any way, as long as there is no structural conflict. The present application is not limited to the particular embodiments disclosed herein, but includes all technical solutions falling within the scope of the claims.

## Claims

1. A battery, comprising:

    a battery cell, comprising a shell and an electrode unit accommodated in the shell, wherein the electrode unit comprises a plurality of first electrode plate layers, the plurality of first electrode plate layers have the same polarity and are stacked in a first direction, some of the first electrode plate layers are provided with first tabs and form two first tab groups, each first tab group comprises a plurality of first tabs stacked and connected to one another, and the first electrode plate layer which is provided with no first tab is provided between the two first tab groups; and
    a plurality of heat exchange plates, arranged in the first direction, wherein the shell is arranged between adjacent heat exchange plates and can exchange heat with the heat exchange plates, and each first electrode plate layer at least partially overlaps with the heat exchange plate in the first direction.

2. The battery according to claim 1, wherein the total number of the first electrode plate layers is N, the number of the first tabs in each first tab group is $K_1$, and $K_1$ and N satisfy: $1/4 \leq K_1/N \leq 7/16$; and
optionally, $5/16 \leq K_1/N \leq 7/16$.

3. The battery according to claim 2, wherein the number of first electrode plate layers located between the two first tab groups and provided with no first tab is $K_2$, and $K_2$ and N satisfy: $1/8 \leq K_2/N \leq 1/2$; and
optionally, $1/8 \leq K_2/N \leq 3/8$.

4. The battery according to claim 2 or 3, wherein the shell comprises two first shell walls arranged opposite to each other in the first direction, and each first shell wall is configured to exchange heat with the heat exchange plates;

    in the first direction, the minimum spacing between an outer surface of the first shell wall and the first tab closest to the first shell wall is $D_1$ mm;

$K_1$, N and $D_1$ satisfy: $21 \leq 88 \times K_1/N - D_1/5 \leq 38.4$; and optionally, $26.9 \leq 88 \times K_1/N - D_1/5 \leq 38.3$.

5. The battery according to any one of claims 1 to 4, wherein the shell comprises two first shell walls arranged opposite to each other in the first direction, and each first shell wall is configured to exchange heat with the heat exchange plates;

in the first direction, the minimum spacing between the outer surface of the first shell wall and the first tab closest to the first shell wall is $D_1$ mm;
$D_1$ is 0.5-5; and optionally, $D_1$ is 1-3.

6. The battery according to any one of claims 1 to 5, wherein the two first tab groups are spaced apart in the first direction; and
ends of the two first tab groups are bent in a direction close to each other and are arranged opposite to each other in the first direction.

7. The battery according to any one of claims 1 to 6, wherein the first electrode plate layer in the middlemost portion in the plurality of first electrode plate layers is provided with no first tab, and the first electrode plate layers corresponding to the two first tab groups are located on two sides of the first electrode plate layer in the middlemost portion respectively.

8. The battery according to any one of claims 1 to 7, wherein the electrode unit comprises at least one electrode assembly, and each electrode assembly comprises a first electrode plate and a second electrode plate which have opposite polarities; and
the first electrode plate comprises at least part of the plurality of first electrode plate layers, and a plurality of first electrode plate layers of the first electrode plate form at least one first tab group.

9. The battery according to claim 8, wherein the first electrode plate and the second electrode plate are wound; or the electrode assembly comprises a plurality of second electrode plates, the first electrode plate layers of the first electrode plate and the second electrode plates are arranged alternately in the first direction, the first electrode plate comprises a bent layer, and the bent layer is connected with two adjacent first electrode plate layers.

10. The battery according to claim 8 or 9, wherein the electrode unit comprises two electrode assemblies which are arranged in the first direction; and
each electrode assembly comprises one first tab group.

11. The battery according to any one of claims 8 to 10, wherein the first electrode plate is a negative electrode plate.

12. The battery according to claim 11, wherein the first electrode plate comprises a negative electrode active material; and a volume distribution particle size Dv50 of the negative electrode active material is $\leq 15$ μm, and/or, a specific surface area of the negative electrode active material is in a range from 0.5 $m^2/g$ to 5 $m^2/g$.

13. The battery according to claim 11 or 12, wherein the first electrode plate comprises a negative electrode active material, and the negative electrode active material comprises at least one of graphite, hard carbon, soft carbon, silicon oxide or silicon carbide.

14. The battery according to any one of claims 11 to 13, wherein the first electrode plate comprises a negative electrode current collector and a negative electrode active material layer applied onto a surface of the negative electrode current collector; and a coating weight per unit area of the negative electrode active material layer is less than or equal to 150 mg/1540.25 $mm^2$.

15. The battery according to any one of claims 1 to 14, wherein the electrode unit comprises a plurality of second electrode plate layers, the polarity of the second electrode plate layers is opposite to the polarity of the first electrode plate layers, and the second electrode plate layers and the first electrode plate layers are stacked in the first direction; and some of the second electrode plate layers are provided with second tabs and form two second tab groups, each second tab group comprises a plurality of second tabs stacked and connected to one another, and the second electrode plate layer which is provided with no second tab is provided between the two second tab groups.

16. The battery according to claim 15, wherein the total number of the second electrode plate layers is M, the number of the second tabs in each second tab group is $K_3$, and $K_3$ and M satisfy: $1/4 \leq K_3/M \leq 7/16$; and optionally, $5/16 \leq K_3/M \leq 7/16$.

17. The battery according to claim 16, wherein the number of the second electrode plate layers located between the two second tab groups and provided with no second tab is $K_4$, and $K_4$ and M satisfy: $1/8 \leq K_4/M \leq 1/2$; and optionally, $1/8 \leq K_4/M \leq 3/8$.

18. The battery according to any one of claims 15 to 17, wherein each first tab is a negative electrode tab, and each second tab is a positive electrode tab; and
the number of the first tabs in the first tab group is greater than the number of the second tabs in the second tab group.

19. The battery according to claim 18, wherein each first tab is a copper tab, each second tab is an aluminum tab, a sum of cross-sectional areas of all the second tabs is A1 with a unit of $mm^2$, a sum of cross-sectional areas of all the first tabs is A2 with a unit of $mm^2$, satisfying: $A1 \leq 2.5A2$; and optionally, $A1 \leq 1.5A2$.

20. The battery according to any one of claims 1 to 19, wherein the battery cell further comprises an electrolyte accommodated in the shell, and ionic conductivity of the electrolyte is in a range from 9 mS/cm to 16 mS/cm.

21. The battery according to any one of claims 1 to 20, wherein a direct current resistance of the battery cell is less than or equal to 0.4 milliohm.

22. The battery according to any one of claims 1 to 21, wherein,

each first electrode plate layer comprises an electrode plate body, some of the first electrode plate layers are provided with the first tabs extending from ends of the electrode plate bodies in a second direction, wherein the second direction is perpendicular to the first direction; and
each electrode plate body at least partially overlaps with the heat exchange plate in the first direction.

23. The battery according to claim 22, wherein in the second direction, each heat exchange plate has a size of $H_1$, each electrode plate body has a size of $H_2$, and $0.6 \leq H_1/H_2 \leq 1.2$; and optionally, $0.8 \leq H_1/H_2 \leq 1.1$.

24. The battery according to claim 22 or 23, wherein in the second direction, spacing between an edge of each electrode plate body close to the first tab and an edge of each heat exchange plate close to the first tab is $L_1$, and $L_1 \leq 20$ mm; and optionally, $L_1 \leq 15$ mm.

25. The battery according to any one of claims 22 to 24, wherein,

in the second direction, the edge of each heat exchange plate close to the first tab exceeds the edge of each electrode plate body close to the first tab; or
in the second direction, the edge of each heat exchange plate close to the first tab is flush with the edge of each electrode plate body close to the first tab.

26. The battery according to any one of claims 1 to 25, wherein the shell comprises two first shell walls opposite in the first direction, two second shell walls opposite in the second direction and two third shell walls opposite in a third direction, wherein the first direction, the second direction and the third direction are perpendicular pairwise; and
the area of each first shell wall is greater than the area of each second shell wall and greater than the area of each third shell wall.

27. The battery according to any one of claims 1 to 26, wherein a plurality of battery cells arranged in sequence are arranged between the adjacent heat exchange plates, and an arrangement direction of the plurality of battery cells is perpendicular to the first direction.

28. The battery according to any one of claims 1 to 27, wherein an average charging rate of the battery cell is x, wherein $x \geq 2$.

29. The battery according to claim 28, wherein x is 2, 3, 4, 5 or 6.

30. An electrical apparatus, comprising the battery according to any one of claims 1 to 29, wherein the battery is configured to provide electric energy.

**FIG. 1**

**FIG. 2**

**FIG. 3**

**FIG. 4**

**FIG. 5**

**FIG. 6**

10

111
111a   111c        121      121a            13
E                                                    112
111
11
112

E

12

10b                                                  10b

Y
                                                     10a
X        111 (111c)   121

W

**FIG. 7**

111a

111c

H₂                                             12

13

11b  11a  11b

**FIG. 8**

**FIG. 9**

FIG. 10

**FIG. 11**

**FIG. 12**

**FIG. 13**

**FIG. 14**

## INTERNATIONAL SEARCH REPORT

| International application No. |
| --- |
| **PCT/CN2024/089481** |

| A. | CLASSIFICATION OF SUBJECT MATTER |
| --- | --- |

H01M50/244(2021.01)i; H01M50/531(2021.01)i; H01M50/533(2021.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS: CNTXT; WPABS; DWPI; ENTXT; CNKI: 电池, 电极, 极片, 极耳, 换热板, battery, electrode, pole sheet, tab, heat exchange plate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2023137950 A1 (JIANGSU CONTEMPORARY AMPEREX TECHNOLOGY LIMITED) 27 July 2023 (2023-07-27)<br>description, paragraphs 64-131, and figures 1-14 | 1-30 |
| Y | CN 219203335 U (CONTEMPORARY AMPEREX TECHNOLOGY CO., LTD.) 16 June 2023 (2023-06-16)<br>description, paragraphs 277-289, and figures 1-10 | 1-30 |
| Y | CN 105322210 A (SAMSUNG SDI CO., LTD.) 10 February 2016 (2016-02-10)<br>description, paragraphs 36-78, and figures 1-6 | 1-30 |
| Y | CN 116231159 A (CONTEMPORARY AMPEREX TECHNOLOGY CO., LTD.) 06 June 2023 (2023-06-06)<br>description, paragraphs 54-129, and figures 1-6 | 1-30 |
| A | JP 2017143003 A (GS YUASA CORP.) 17 August 2017 (2017-08-17)<br>entire document | 1-30 |

☐ Further documents are listed in the continuation of Box C.      ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **03 July 2024** | **13 July 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/089481**

| Patent document cited in search report | | | Publication date (day/month/year) | Patent family member(s) | | | Publication date (day/month/year) |
|---|---|---|---|---|---|---|---|
| WO | 2023137950 | A1 | 27 July 2023 | CN | 114094288 | A | 25 February 2022 |
| | | | | CN | 114094288 | B | 05 July 2022 |
| CN | 219203335 | U | 16 June 2023 | WO | 2023155624 | A1 | 24 August 2023 |
| | | | | WO | 2023155625 | A1 | 24 August 2023 |
| | | | | WO | 2023155622 | A1 | 24 August 2023 |
| | | | | WO | 2023155623 | A1 | 24 August 2023 |
| | | | | CN | 116325314 | A | 23 June 2023 |
| | | | | CN | 116491016 | A | 25 July 2023 |
| | | | | KR | 20230126172 | A | 29 August 2023 |
| | | | | CN | 116802897 | A | 22 September 2023 |
| | | | | CN | 219575742 | U | 22 August 2023 |
| | | | | CN | 116724443 | A | 08 September 2023 |
| | | | | CN | 116745978 | A | 12 September 2023 |
| | | | | CN | 219203336 | U | 16 June 2023 |
| | | | | CN | 220042013 | U | 17 November 2023 |
| CN | 105322210 | A | 10 February 2016 | JP | 2016004777 | A | 12 January 2016 |
| | | | | JP | 6595162 | B2 | 23 October 2019 |
| | | | | US | 2015364727 | A1 | 17 December 2015 |
| | | | | US | 10388915 | B2 | 20 August 2019 |
| | | | | EP | 2958163 | A2 | 23 December 2015 |
| | | | | EP | 2958163 | B1 | 13 December 2017 |
| | | | | KR | 20150144597 | A | 28 December 2015 |
| | | | | KR | 102177505 | B1 | 11 November 2020 |
| | | | | CN | 105322210 | B | 18 September 2020 |
| CN | 116231159 | A | 06 June 2023 | CN | 116231159 | B | 01 September 2023 |
| JP | 2017143003 | A | 17 August 2017 | JP | 6938844 | B2 | 22 September 2021 |
| | | | | JP | 2021184397 | A | 02 December 2021 |
| | | | | JP | 7099602 | B2 | 12 July 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202322655888X
- GB 190772016 T
- GB 195872017 T